(19) Europäisches Patentamt
European Patent Office
Office européen des brevets

(11) **EP 4 704 140 A1**

(12) **EUROPEAN PATENT APPLICATION**

(43) Date of publication:
**04.03.2026 Bulletin 2026/10**

(21) Application number: **25198497.7**

(22) Date of filing: **27.08.2025**

(51) International Patent Classification (IPC):
***H01J 49/00*** *(2006.01)*

(52) Cooperative Patent Classification (CPC):
**H01J 49/0027**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.08.2024 US 202418816665**

(71) Applicant: **Thermo Finnigan LLC**
**San Jose, CA 95134 (US)**

(72) Inventors:
• **ZHENG, Xin**
**Austin (US)**
• **SHINHOLT, Deven Lee**
**Austin (US)**

(74) Representative: **Boult Wade Tennant LLP**
**Salisbury Square House**
**8 Salisbury Square**
**London EC4Y 8AP (GB)**

(54) **INCONCLUSIVE-TRIGGERED REINJECTION FOR MASS SPECTROMETRY SCREENING**

(57) Systems/techniques are provided for facilitating inconclusive-triggered reinjection for mass spectrometry screening. In various embodiments, a system can access a screening list specifying a plurality of target chemical compounds. In various aspects, the system can classify respective ones of the plurality of target chemical compounds as being present or absent in a sample, based on causing a chromatograph and mass spectrometer to perform on the sample an iterative injection protocol whose subsequent iterations are progressively compound-selective and triggered by inconclusive presence or absence classifications from prior iterations.

FOR *j*-TH ITERATION

IF *j* = 1, THIS IS EMPTY;

IF *j* > 1, THIS INCLUDES WHICHEVER OF PLURALITY OF TARGET CHEMICAL COMPOUNDS 308 WERE CLASSIFIED AS PRESENT IN ANY PREVIOUS ITERATION

PRESENT RUNNING LIST 602

IF *j* = 1, THIS IS EMPTY;

IF *j* > 1, THIS INCLUDES WHICHEVER OF PLURALITY OF TARGET CHEMICAL COMPOUNDS 308 WERE CLASSIFIED AS ABSENT IN ANY PREVIOUS ITERATION

ABSENT RUNNING LIST 604

IF *j* = 1, THIS CONTAINS ALL OF PLURALITY OF TARGET CHEMICAL COMPOUNDS 308;

IF *j* > 1, THIS EXCLUDES WHICHEVER TARGET CHEMICAL COMPOUNDS ARE IN PRESENT RUNNING LIST 602 OR ABSENT RUNNING LIST 604

INCONCLUSIVE RUNNING LIST 606

**FIG. 6**

EP 4 704 140 A1

**Description**

BACKGROUND

The field of mass spectrometry can involve screening samples for certain chemical compounds. Existing techniques for facilitating such screening suffer from various disadvantages.

SUMMARY

The following presents a summary to provide a basic understanding of one or more embodiments. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus or computer program products that facilitate inconclusive-triggered reinjection for mass spectrometry screening are described.

According to one or more embodiments, a scientific instrument is provided. The scientific instrument can comprise a chromatograph coupled to a mass spectrometer. In various aspects, the scientific instrument can further comprise a processor that can execute computer-executable components stored in a non-transitory computer-readable memory. In various instances, the computer-executable components can comprise an access component that can access a screening list specifying a plurality of target chemical compounds. In various cases, the computer-executable components can comprise a screening component that can classify respective ones of the plurality of target chemical compounds as being present or absent in a sample, based on causing the chromatograph and mass spectrometer to perform on the sample an iterative injection protocol whose subsequent iterations are progressively compound-selective and triggered by inconclusive presence or absence classifications from prior iterations.

According to one or more embodiments, a computer-implemented method is provided. In various embodiments, the computer-implemented method can comprise accessing, by a device operatively coupled to a processor, a screening list specifying a plurality of target chemical compounds. In various aspects, the computer-implemented method can comprise classifying, by the device, respective ones of the plurality of target chemical compounds as being present or absent in a sample, based on causing a chromatograph and mass spectrometer to perform on the sample an iterative injection protocol whose subsequent iterations are progressively compound-selective and triggered by inconclusive presence or absence classifications from prior iterations.

According to one or more embodiments, a computer program product for facilitating inconclusive-triggered reinjection for mass spectrometry screening is provided. In various embodiments, the computer program product can comprise a non-transitory computer-readable memory having program instructions embodied therewith. In various aspects, the program instructions can be executable by a processor to cause the processor to establish electronic communication with a gas chromatograph and a mass spectrometer, the gas chromatograph and mass spectrometer being loaded with an analytical sample. In various instances, the program instructions can be further executable to cause the processor to retrieve a screening list that specifies one or more hazardous chemical compounds that are not permitted to be in the analytical sample. In various cases, the program instructions can be further executable to cause the processor to respectively classify the one or more hazardous chemical compounds as being present or absent in the analytical sample, based on causing the gas chromatograph and mass spectrometer to perform on the analytical sample an iterative injection protocol whose subsequent iterations are progressively compound-selective and triggered by inconclusive presence or absence classifications from prior iterations.

Further aspects of the invention are set out in the following numbered clauses:

1. A system, comprising:

a chromatograph coupled to a mass spectrometer; and
a processor that executes computer-executable components stored in a non-transitory computer-readable memory, wherein the computer-executable components comprise:

an access component that accesses a screening list specifying a plurality of target chemical compounds; and
a screening component that classifies respective ones of the plurality of target chemical compounds as being present or absent in a sample, based on causing the chromatograph and mass spectrometer to perform on the sample an iterative injection protocol whose subsequent iterations are progressively compound-selective and triggered by inconclusive presence or absence classifications from prior iterations.

2. The system of clause 1, wherein, during a current iteration of the iterative injection protocol, the screening component:

accesses a first running list that includes only those of the plurality of target chemical compounds which have been classified as present in the sample during any previous iteration of the iterative injection protocol;

accesses a second running list that includes only those of the plurality of target chemical compounds which have been classified as absent in the sample during any previous iteration of the iterative injection protocol; and accesses a third running list that includes only those of the plurality of target chemical compounds which have been neither classified as present nor classified as absent in the sample during any previous iteration of the iterative injection protocol.

3. The system of clause 2, wherein, during the current iteration, the screening component: causes the chromatograph and mass spectrometer to inject a portion of the sample, to selectively scan that portion for each target chemical compound in the third running list, and to ignore each target chemical compound that is in either the first running or the second running list, thereby yielding current mass spectrometry data that exhibits heightened sensitivity with respect to the target chemical compounds in the third running list.

4. The system of clause 3, wherein the chromatograph and mass spectrometer perform the selective scanning via: selected ion monitoring that is directed to quantitation ions and confirmation ions associated with any of the target chemical compounds on the third running list; or full-scanning that is temporally truncated based on retention indices associated with any of the target chemical compounds on the third running list.

5. The system of clause 3, wherein, during the current iteration, the screening component:

classifies, based on comparing the current mass spectrometry data to reference mass spectrometry data corresponding to the screening list, each target chemical compound in the third running list as being present in the sample, as being absent in the sample, or as being neither present nor absent in the sample; moves, from the third running list to the first running list, whichever target chemical compounds that are classified as being present in the sample; moves, from the third running list to the second running list, whichever target chemical compounds that are classified as being absent in the sample; and maintains in the third running list whichever target chemical compounds are classified as being neither present nor absent in the sample.

6. The system of clause 5, wherein the current mass spectrometry data comprises a chromatogram produced by the chromatograph and mass spectra produced by the mass spectrometer and respectively corresponding to peaks in the chromatogram, and wherein the screening component classifies the target chemical compounds in the third running list based on:

computing retention indices for the peaks of the chromatogram; selecting a target chemical compound from the third running list; in response to no peak of the chromatogram having a retention index that is within a threshold margin of a reference retention index associated with the selected target chemical compound, classifying the selected target chemical compound as being absent in the sample; in response to one or more first peaks of the chromatogram having retention indices within the threshold margin of the reference retention index, accessing one or more first mass spectra respectively generated by the mass spectrometer for the one or more first peaks; in response to at least one of the one or more first mass spectra satisfying presence classification criteria with respect to a reference mass spectrum associated with the selected target chemical compound, classifying the selected target chemical compound as being present in the sample; in response to all of the one or more first mass spectra satisfying absence classification criteria with respect to the reference mass spectrum, classifying the selected target chemical compound as being absent in the sample; and in response to all of the one or more first mass spectra failing to satisfy the presence classification criteria and at least one of the one or more first mass spectra failing to satisfy the absence classification criteria, classifying the selected target chemical compound as being neither present nor absent in the sample.

7. The system of clause 6, wherein the presence classification criteria or absence classification criteria are based on: comparison of quantitation-to-confirmation ion ratios; or computation of library scores.

8. The system of clause 6, wherein the screening component computes the retention indices for the one or more first peaks, based on an n-alkane injection protocol performed by the chromatograph and mass spectrometer prior to the iterative injection protocol.

9. The system of clause 6, wherein the screening component: deconvolutes the one or more first peaks prior to computing the retention indices.

10. A computer-implemented method, comprising:

accessing, by a device operatively coupled to a processor, a screening list specifying a plurality of target chemical compounds; and classifying, by the device, respective ones of the plurality of target chemical compounds as being present or absent in a sample, based on causing a chromatograph and mass spectrometer to perform on the sample an iterative injection protocol whose subsequent iterations are progressively compound-selective and triggered by inconclusive presence or absence classifications from prior iterations.

11. The computer-implemented method of clause 10, further comprising, during a current iteration of the iterative injection protocol:

accessing, by the device, a first running list that includes only those of the plurality of target chemical compounds which have been classified as present in the sample during any previous iteration of the iterative injection protocol; accessing, by the device, a second running list that includes only those of the plurality of target chemical compounds which have been classified as absent in the sample during any previous iteration of the iterative injection protocol; and accessing, by the device, a third running list that includes only those of the plurality of target chemical compounds which have been neither classified as present nor classified as absent in the sample during any previous iteration of the iterative injection protocol.

12. The computer-implemented method of clause 11, further comprising, during the current iteration: causing, by the device, the chromatograph and mass spectrometer to inject a portion of the sample, to selectively scan that portion for each target chemical compound in the third running list, and to ignore each target chemical compound that is in either the first running or the second running list, thereby yielding current mass spectrometry data that exhibits heightened sensitivity with respect to the target chemical compounds in the third running list.

13. The computer-implemented method of clause 12, wherein the chromatograph and mass spectrometer perform the selective scanning via: selected ion monitoring that is directed to quantitation ions and confirmation ions associated with any of the target chemical compounds on the third running list; or full-scanning that is temporally truncated based on retention indices associated with any of the target chemical compounds on the third running list.

14. The computer-implemented method of clause 12, further comprising, during the current iteration:

classifying, by the device and based on comparing the current mass spectrometry data to reference mass spectrometry data corresponding to the screening list, each target chemical compound in the third running list as being present in the sample, as being absent in the sample, or as being neither present nor absent in the sample; moving, by the device and from the third running list to the first running list, whichever target chemical compounds that are classified as being present in the sample; moving, by the device and from the third running list to the second running list, whichever target chemical compounds that are classified as being absent in the sample; and maintaining, by the device, in the third running list whichever target chemical compounds are classified as being neither present nor absent in the sample.

15. The computer-implemented method of clause 14, wherein the current mass spectrometry data comprises a chromatogram produced by the chromatograph and mass spectra produced by the mass spectrometer and respectively corresponding to peaks in the chromatogram, and the classifying the target chemical compounds in the third running list comprises:

computing, by the device, retention indices for the peaks of the chromatogram; selecting, by the device, a target chemical compound from the third running list; in response to no peak of the chromatogram having a retention index that is within a threshold margin of a reference retention index associated with the selected target chemical compound, classifying, by the device, the selected target chemical compound as being absent in the sample; in response to one or more first peaks of the chromatogram having retention indices within the threshold margin of the reference retention index, accessing, by the device, one or more first mass spectra respectively generated by the mass spectrometer for the one or more first peaks; in response to at least one of the one or more first mass spectra satisfying presence classification criteria with respect to a reference mass spectrum associated with the selected target chemical compound, classifying, by the device, the selected target chemical compound as being present in the sample;

in response to all of the one or more first mass spectra satisfying absence classification criteria with respect to the reference mass spectrum, classifying, by the device, the selected target chemical compound as being absent in the sample; and

in response to all of the one or more first mass spectra failing to satisfy the presence classification criteria and at least one of the one or more first mass spectra failing to satisfy the absence classification criteria, classifying, by the device, the selected target chemical compound as being neither present nor absent in the sample.

16. The computer-implemented method of clause 15, wherein the presence classification criteria or the absence classification criteria are based on: comparison of quantitation-to-confirmation ion ratios; or computation of library scores.

17. The computer-implemented method of clause 15, wherein the device computes the retention indices for the one or more first peaks, based on an n-alkane injection protocol performed by the chromatograph and mass spectrometer prior to the iterative injection protocol.

18. The computer-implemented method of clause 15, further comprising:

deconvoluting the one or more first peaks prior to computing the retention indices.

19. A computer program product for facilitating inconclusive-triggered reinjection for mass spectrometry screening, the computer program product comprising a non-transitory computer-readable memory having program instructions embodied therewith, the program instructions executable by a processor to cause the processor to:

establish electronic communication with a gas chromatograph and a mass spectrometer, the gas chromatograph and mass spectrometer being loaded with an analytical sample;

retrieve a screening list that specifies one or more hazardous chemical compounds that are not permitted to be in the analytical sample; and

respectively classify the one or more hazardous chemical compounds as being present or absent in the analytical sample, based on causing the gas chromatograph and mass spectrometer to perform on the analytical sample an iterative injection protocol whose subsequent iterations are progressively compound-selective and triggered by inconclusive presence or absence classifications from prior iterations.

20. The computer program product of clause 19, wherein, during a current iteration of the iterative injection protocol, the gas chromatograph and mass spectrometer perform progressively compound-selective scanning via: selected ion monitoring that is directed to quantitation ions and confirmation ions associated with any of the one or more hazardous chemical compounds that have been classified as neither present nor absent in any previous iteration; or full-scanning that is temporally truncated based on retention indices associated with any of the one or more hazardous chemical compounds that have been classified as neither present nor absent in any previous iteration.

DESCRIPTION OF THE DRAWINGS

Various embodiments will be readily understood by the following detailed description in conjunction with the accompanying figures. To facilitate this description, like reference numerals designate like structural elements. Embodiments are illustrated by way of example, not by way of limitation, in the figures. The figures are not necessarily drawn to scale.

FIG. 1 illustrates an example, non-limiting block diagram of a scientific instrument module in accordance with various embodiments described herein.

FIG. 2 illustrates an example, non-limiting flow diagram of a computer-implemented method in accordance with various embodiments described herein.

FIG. 3 illustrates a block diagram of an example, non-limiting system that facilitates inconclusive-triggered reinjection for mass spectrometry screening in accordance with one or more embodiments described herein.

FIG. 4 illustrates a block diagram of an example, non-limiting system including an iterative injection protocol that facilitates inconclusive-triggered reinjection for mass spectrometry screening in accordance with one or more embodiments described herein.

FIGs. 5-12 illustrate example, non-limiting block diagrams showing how an iterative injection protocol can be facilitated in accordance with one or more embodiments described herein.

FIGs. 13-17 illustrate flow diagrams of example, non-limiting computer-implemented methods that facilitate inconclusive-triggered reinjection for mass spectrometry screening in accordance with one or more embodiments described herein.

FIG. 18 illustrates a block diagram of an example, non-limiting operating environment in which one or more embodiments described herein can be facilitated.

FIG. 19 illustrates an example networking environment operable to execute various implementations described herein.

DETAILED DESCRIPTION

The following detailed description is merely illustrative and is not intended to limit embodiments or application/uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Various operations can be described as multiple discrete actions or operations in turn, in a manner that is most helpful in understanding the subject matter disclosed herein. However, the order of description should not be construed as to imply that these operations are necessarily order dependent. In particular, these operations can be performed in an order different from the order of presentation. Operations described can be performed in a different order from the described embodiments. Various additional operations can be performed, or described operations can be omitted in additional embodiments.

Although some elements may be referred to in the singular (e.g., "a processing device"), any appropriate elements may be represented by multiple instances of that element, and vice versa. For example, a set of operations described as performed by a processing device may be implemented with different ones of the operations performed by different processing devices. As used herein, the phrase "based on" should be understood to mean "based at least in part on," unless otherwise specified.

A mass spectrometer coupled to a chromatograph can be considered as a type of scientific instrument that can be deployed in a scientific, laboratory, research, or clinical operational context or setting, so as to determine the chemical composition or make-up of unknown samples. To facilitate such chemical composition determination, the mass spectrometer or chromatograph can comprise a complex arrangement of actuatable parts (e.g., ion sources, ion lenses, heaters, coolers, columns, ovens, injectors, mass analyzers, fluid valves, fluid pumps, circuit switches), sensors (e.g., ion detectors, voltmeters, thermistors, potentiometers, pressure gauges), or consumables (e.g., carrier fluids, calibrants, filters).

For any given sample, it can sometimes be desired to screen the sample for certain or specified chemical compounds. Such screening can be facilitated via a mass spectrometer and chromatograph. In other words, a portion of the sample can be injected into the mass spectrometer and chromatograph, thereby producing mass spectrometry data (e.g., chromatograms, mass spectra) characterizing the sample, and that mass spectrometry data can be compared to reference mass spectrometry data that is known to correspond to the certain or specified chemical compounds. In this way, it can be respectively determined whether or not each of those certain or specified chemical compounds is present in the sample.

The performance of such screening (whether it be suspect screening, targeted screening, or untargeted screening) can be considered as useful in various industries or operating contexts. For example, various legal jurisdictions mandate that food stuffs (e.g., drinks, meats, vegetables, fruits), food packaging (e.g., culinary paper, culinary plastic bags or surfaces), pharmaceuticals (e.g., oral, aerosol, or topical medications or drugs), medical devices (e.g., bandages, surgical equipment bags or wrappers), environmental samples (e.g., air, soil, river/lake/ocean water, animal scat), or industrial samples (e.g., battery solutions or mixtures, semiconductor solutions or mixtures, raw materials for manufacturing or fabrication) be screened to check for presence or absence of regulated, emerging, or otherwise notable chemical compounds (e.g., known or expected toxins; known or expected additives; known or expected contaminants, known or expected impurities, known or expected by-products).

As the inventors of various embodiments described herein recognized, existing techniques for facilitating such screening suffer from various disadvantages. In particular, the present inventors recognized that, when existing techniques are implemented with respect to a sample, the mass spectrometer and chromatograph produce mass spectrometry data for that sample according to whichever scanning protocol (e.g., full-scan protocol, selected ion monitoring (SIM) protocol) that a user or technician chooses, without the mass spectrometer and chromatograph being informed of what specific chemical compounds for which the sample is to be screened. Once the mass spectrometry data is generated, the user or technician can evaluate (e.g., via their subject matter expertise) the mass spectrometry data, so as to determine which of the specific chemical compounds are present in the sample and which are instead absent from the sample. Unfortunately, as the present inventors recognized, such existing techniques sometimes generate mass spectrometry data that does not permit a conclusive present or absent determination with respect to one or more of the specific chemical compounds (e.g., some of the mass spectrometry data might be noisy or chemically ambiguous). In such situations, the user or technician might rerun the sample through the mass spectrometer and chromatograph, possibly with a different or modified scanning protocol, so as to obtain new mass spectrometry data that (hopefully) permits a conclusive present or absent determination with respect to those one or more specific chemical compounds (e.g., it can be desired to cause the new mass spectrometry data to be less noisy or less chemically ambiguous). Once the new mass spectrometry data is generated, the user or technician can reperform their evaluations on the new mass spectrometry data. However, because the new mass spectrometry data might still not permit conclusive present or absent determinations for some of those one or more of the specific chemical compounds, even more reruns and re-evaluations by the user or technician can be warranted. Regrettably, such existing techniques can be considered as highly time-consuming. After all, it can take even experienced users or technicians hours to evaluate data produced by the mass spectrometer and chromatograph, and so the time required to perform multiple such evaluations (e.g., one hours-long evaluation per scan) accumulates quickly. Such time-consumption (and the possibility of human-introduced error) can be further exacerbated given the fact that many industrial or environment samples are often required to be analyzed in an extremely voluminous, high-throughput manner. Additionally, some samples (e.g., biological samples containing unstable or rapidly decomposing metabolites) can have quite short shelf-lives (e.g., minutes to hours, even when such samples are derivatized). Thus, when existing techniques are applied to such samples, those samples might become stale or spoiled before the user or technician (who might be repetitively taking hours to evaluate one scan's worth of mass spectrometry data) conclusively determines whether each of the specific chemical compounds is present or absent. For at least these reasons, existing techniques can be considered as suffering from various technical problems.

Accordingly, systems or techniques that can ameliorate such technical problems can be considered as desirable.

Various embodiments described herein can address one or more of these technical problems. One or more embodiments described herein can include systems, computer-implemented methods, apparatus, or computer program products that can facilitate inconclusive-triggered reinjection for mass spectrometry screening. In particular, when given a sample and a screening list of chemical compounds for which the sample is to be screened, various embodiments described herein can involve causing a mass spectrometer and chromatograph to inject a portion of the sample, to generate mass spectrometry data by performing a scan on that portion of the sample, and to compare (e.g., via retention index comparisons, quantitation-to-confirmation ion ratio comparisons, or library score computations) that mass spectrometry data to reference mass spectrometry data that is known to correspond to the chemical compounds on the screening list. Such comparison can allow some chemical compounds on the screening list to be automatically determined as present in the sample and can allow other chemical compounds on the screening list to be automatically determined as absent from the sample. Now, if there are any chemical compounds on the screening list that are neither determined to be present nor determined to be absent by such comparison (e.g., this might be due to noisiness or ambiguity in the mass spectrometry data), various embodiments described herein can involve automatically causing the mass spectrometer and chromatograph to promptly inject another portion of the sample, to generate new mass spectrometry data by performing a new scan on the another portion of the sample, and to compare that new mass spectrometry data to the reference mass spectrometry data. In some cases, the new scan can achieve higher sensitivity than the previous scan, by using a scanning protocol that is temporally or ionically selective with respect to whichever chemical compounds on the screening list were neither determined to be present nor absent previously. Such increased sensitivity can be considered as causing the new scan to have a higher likelihood or probability than the previous scan of determining the presence or absence of those previously inconclusive chemical compounds. After the new scan, if there are still one or more inconclusive chemical compounds on the screening list, yet another rejection iteration can be promptly performed. Such reinjection iterations can repeat in this fashion until there are no more inconclusive chemical compounds on the screening list (e.g., until each chemical compound on the screening list has been determined to be present or absent with respect to the sample). In other words, each reinjection iteration can be performed in response to there being at least one inconclusive chemical compound on the screening list, hence the term "inconclusive-triggered injection." At such point, various embodiments described herein can generate or transmit an electronic notification that indicates (e.g., to a user or technician) which chemical compounds on the screening list are present in the sample and which are absent from the sample.

Accordingly, various embodiments described herein can be considered as an innovative software operating mode or screening strategy which, when employed by the mass spectrometer and chromatograph, can prevent inconclusive mass spectrometry data from being outputted to a user or technician. Thus, the user or technician need not waste hours upon hours repetitively evaluating inconclusive mass spectrometry data, unlike with existing techniques. Moreover, the herein-described inconclusive-triggered injections can be accomplished in mere minutes, compared to the hours upon hours required by existing techniques. So, various embodiments described herein can be used to screen unstable or short-shelf-life samples before such samples become stale or spoiled, unlike existing techniques.

Various embodiments described herein can be considered as a computerized tool (e.g., any suitable combination of computer-executable hardware or computer-executable software) that can be electronically installed on or otherwise with respect to a chromatograph-equipped mass spectrometer and that can facilitate inconclusive-triggered reinjection for mass spectrometry screening. In various aspects, such computerized tool can comprise an access component or a screening component.

In various embodiments, the chromatograph-equipped mass spectrometer can be considered as comprising a mass spectrometer that is operatively coupled in any suitable fashion to a chromatograph. In various aspects, the mass spectrometer can comprise any suitable constituent hardware. As some non-limiting examples, the mass spectrometer can comprise any suitable ion beam emitter (e.g., matrix assisted laser desorption/ionization (MALDI) source, electrospray ionization (ESI) source, atmospheric pressure chemical ionization (APCI) source, atmospheric pressure photoionization (APPI) source, inductively coupled plasma (ICP) source, electron ionization source, chemical ionization source, photoionization source, glow discharge ionization source, thermospray ionization source, combo-source), any suitable mass analyzer (e.g., quadrupole mass filter analyzer, ion trap analyzer, quadrupole ion trap analyzer, time-of-flight (TOF) analyzer, electrostatic trap (e.g., ORBITRAP) mass analyzer, Fourier transform ion cyclotron resonance (FT-ICR) mass analyzer), any suitable ion detector (e.g., electron multiplier detector, microchannel plate detector, image charge detector, Faraday cup detector), or any suitable ion optics equipment (e.g., ion focusing lenses, ion guides, ion deflectors). Likewise, in various instances, the chromatograph can comprise any suitable constituent hardware (e.g., gas chromatography hardware, liquid chromatography hardware, ion chromatography hardware). As some non-limiting examples, the chromatograph can comprise any suitable sample injector (e.g., hot injectors such as split, splitless, direct, or gas sampling valve (GSV); cold injectors such as cold on column (COC) or programmed temperature vaporization (PTV); injection syringe; infusion syringe; vaporizer; nebulizer), any suitable chromatograph column (e.g., comprising any suitable absorbent packing material or any suitable capillary with different stationary phase films), any suitable column oven or heater, or any suitable carrier fluid flow devices (e.g., fluid valves, fluid pumps). In various aspects, any suitable autosampler or auxiliary sampling devices can pair with chromatography hardware to perform sample preparation and introduction (e.g., gas and liquid sampling valve, headspace autosampler, solid phase microextraction (SPME), headspace-SPME; in-tube extraction-dynamic headspace (ITEX-DHS), thermal desorbers (TD), purge and trap samplers (P&T), pyrolyzers). In various instances, carrier gas species can non-limitingly include helium, hydrogen, nitrogen, argon, methane, or any suitable combination thereof. In various cases, when given any sample, the sample can be injected into the chromatograph, the sample can be separated into various compositional components by the chromatograph, and those various compositional components can be ionized and subsequently analyzed by the mass spectrometer (e.g., the mass spectrometer can record relative abundances of sample ions as a function of mass-to-charge ratio). In various aspects, the chromatograph-equipped mass spectrometer can be loaded with a sample.

In various embodiments, there can be a screening list. In various aspects, the screening list can specify any suitable number of target chemical compounds for which the loaded sample is desired to be screened. In other words, it can be desired to determine which target chemical compounds in the screening list are present in the loaded sample and which target chemical compounds in the screening list are instead absent from the loaded sample. As some non-limiting examples, some target chemical compounds on the screening list can be known toxins or other hazardous agents which are desired to not be in the loaded sample, whereas other target chemical compounds on the screening list can instead be known additives or beneficial agents which are desired to be in the loaded sample.

In various instances, the screening list can be created or defined by users or technicians in an excel sheet (or any other suitable electronic format) and uploaded to the computerized tool for screening. In other instances, the screening list can instead be selectable from any suitable reference mass spectrometry databases (e.g., in either nominal mass format or high-resolution accurate mass format) according to compound classes, types, or groups prior to data acquisition.

In various aspects, the screening list can correspond to reference mass spectrometry data. In various instances, for each target chemical compound in the screening list, the reference mass spectrometry data can include a reference retention index for that target chemical compound, a reference quantitation-to-confirmation ion ratio for that target chemical compound, or a reference mass spectrum for that target chemical compound.

In various embodiments, the access component of the computerized tool can electronically access the chromatograph-equipped mass spectrometer. That is, the access component can electronically interface or communicate with the chromatograph-equipped mass spectrometer, such that other components of the computerized tool can electronically interact with (e.g., send electronic commands to, read electronic signals from) the chromatograph-equipped mass spectrometer. Likewise, in various aspects, the access component can electronically access the screening list or the reference mass spectrometry data. That is, the access component can electronically receive or retrieve the screening list or the reference mass spectrometry data from any suitable database (e.g., relational database, graph database, hybrid database), such that the access component can be considered as a conduit through which other components of the computerized tool can electronically interact with (e.g., read, write, edit, copy, manipulate) the screening list or the reference mass spectrometry data.

In various embodiments, the screening component of the computerized tool can electronically classify respective ones of the target chemical compounds in the screening list as being present in the loaded sample and can classify remaining target chemical compounds in the screening list as being absent from the loaded sample. In various instances, the screening component can accomplish such classification, based on causing the chromatograph-equipped mass spectrometer to perform an iterative injection protocol on the loaded sample. In various cases, the iterations of the iterative injection protocol can be progressively compound-selective and can be triggered in response to inconclusive present or inconclusive absent classifications from prior iterations. In particular, a current iteration of the iterative injection protocol can proceed as follows.

During the current iteration, the screening component can obtain a present running list, an absent running list, and an inconclusive running list.

If the current iteration is the first, beginning, or initial iteration of the iterative injection protocol, then the present running list can be an empty or null set. However, if the current iteration is not the first, beginning, or initial iteration of the iterative injection protocol, then the present running list can be considered as a set that contains whichever target chemical compounds from the screening list have been classified in any previous iteration as being present in the loaded sample.

Similarly, if the current iteration is the first, beginning, or initial iteration of the iterative injection protocol, then the absent running list can be an empty or null set. But, if the current iteration is not the first, beginning, or initial iteration of the iterative injection protocol, then the absent running list can be considered as a set that contains whichever target chemical compounds from the screening list have been classified in any previous iteration as being absent in the loaded sample.

In contrast, if the current iteration is the first, beginning, or initial iteration of the iterative injection protocol, then the inconclusive running list can be equivalent to the screening list. However, if the current iteration is not the first, beginning, or initial iteration of the iterative injection protocol, then the inconclusive running list can be considered as a set obtained by subtracting: the present running list and the absent running list; from the screening list. That is, the inconclusive running list can include whichever target chemical compounds in the screening list that have neither been classified as present nor absent in any previous iteration.

Now, during the current iteration, the screening component can cause the chromatograph-equipped mass spectrometer to inject a portion of the loaded sample. The screening component can accordingly cause the chromatograph-equipped mass spectrometer to scan that portion of the loaded sample, thereby yielding measured mass spectrometry data. In various aspects, the scanning protocol implemented by the chromatograph-equipped mass spectrometer can depend upon the index of the current iteration. If the current iteration is the first, beginning, or initial iteration of the iterative injection protocol, then the chromatograph-equipped mass spectrometer can employ an unrestricted full-scan protocol to scan the injected portion of the loaded sample. If the current iteration is not the first, beginning, or initial iteration of the iterative injection protocol, then the chromatograph-equipped mass spectrometer can instead employ a scanning protocol that is temporally or ionically selective with respect to each target chemical compound that is in the inconclusive running list to scan the injected portion of the loaded sample. In some cases, a temporally-selective scanning protocol can be a full-scan protocol that is truncated to include or encompass only whatever retention times are known or expected to be associated with the target chemical compounds in the inconclusive running list (e.g., can be indicated or derived from the reference mass spectrometry data). In some instances, an ionically-selective scanning protocol can be a SIM protocol that monitors only ions that are known to be either quantitation ions or confirmation ions of the target chemical compounds in the running list (e.g., can be indicated or derived from the reference mass spectrometry data). In some situations, the reference mass spectrometry data might indicate multiple different quantitation ions or multiple different confirmation ions for any given target chemical compound in the inconclusive running list. If a SIM protocol is to be implemented in the current iteration, and if no SIM protocol was performed in any previous iteration, then the screening component can cause the chromatograph-equipped mass spectrometer to use in the current iteration a SIM protocol that monitors all those multiple different quantitation ions and all those multiple different confirmation ions. However, if a SIM protocol is to be implemented in the current iteration, and if a SIM protocol was performed in any previous iteration, then the screening component can cause the chromatograph-equipped mass spectrometer to use in the current iteration a SIM protocol that monitors whichever of those multiple different quantitation ions and those multiple different confirmation ions that were monitored in the most recent prior SIM protocol, less at least one ion. In other words, one or more of the quantitation ions or confirmation ions that were monitored in the most recent prior SIM protocol can be ignored by the SIM protocol of the current iteration. In various cases, which of those multiple different quantitation ions or multiple different confirmation ions to ignore can be chosen by the screening component in any suitable fashion (e.g., in any suitable order of priority, such as in order from least-abundant to most abundant, or such as from least mass to most mass).

During the current iteration, the screening component can determine which (if any) target chemical compounds to move from the inconclusive running list to the present running list, and which (if any) target chemical compounds to instead move from the inconclusive running list to the absent running list. In various aspects, the screening component can make such determinations, based on comparing the measured mass spectrometry data to the reference mass spectrometry data.

In particular, the screening component can select any target chemical compound from the inconclusive running list, and the reference mass spectrometry data can specify for that selected target chemical compound a reference retention time, a reference quantitation-to-confirmation ion ratio, or a reference mass spectrum. Now, the measured mass spectrometry data can include a chromatogram whose peaks (e.g., which can be processed via deconvolution in conjunction with blank/matrix injections and background-subtraction) can be considered as representing respective unknown chemical compounds in the loaded sample. Each peak in the chromatogram can have a respective measured retention index and a respective measured mass spectrum. In various aspects, if no peaks in the chromatogram have measured retention indices that are within any suitable threshold margin of the reference retention index of the selected target chemical compound, then the screening component can move the selected target chemical compound from the inconclusive running list to the absent running list (e.g., can conclusively classify the selected target chemical compound as being absent from the loaded sample). On the other hand, if one or more peaks in the chromatogram have measured retention indices that are within the threshold margin of the reference retention index of the selected target chemical compound, then those one or more peaks can be considered as representing unknown chemical compounds in the loaded sample that are potential matches for the selected target chemical compound.

In various instances, the screening component can determine how much similarity there is between the reference mass spectrum and whatever measured mass spectra correspond to those potentially-matching peaks. If at least one of those measured mass spectra has more than any suitable upper level of similarity with the reference mass spectrum, then the screening component can move the selected target chemical compound from the inconclusive running list to the present running list (e.g., can conclusively classify the selected target chemical compound as being absent from the loaded sample). In contrast, if all of those measured mass spectra have less than any suitable lower level of similarity with the reference mass spectrum, then the screening component can move the selected target chemical compound from the inconclusive running list to the absent running list (e.g., can conclusively classify the selected target chemical compound as being absent from the loaded sample). In contrast again, if all of those measured mass spectra have less than the upper level of similarity with the reference mass spectrum, and if at least one of those measured mass spectra has more than the lower level of similarity with the reference mass spectrum, then the screening component can retain the selected target chemical compound in the inconclusive running list (e.g., can be unable to conclusively classify the selected target chemical compound as being present in or absent from the loaded sample).

As a non-limiting example, the screening component can facilitate this similarity comparison based on quantitation-to-confirmation (Q-C) ion ratios. Specifically, the screening component can compute respective Q-C ion ratios for the one or more potentially-matching peaks (e.g., the reference Q-C ion ratio can specify a particular quantitation ion and a particular confirmation ion; intensities or abundances of those particular ions can be read from the measured mass spectra that correspond to the potentially-matching peaks, and those read intensities or abundances can be appropriately arranged into fractions, thereby yielding the computed Q-C ion ratios). Additionally, each of the measured mass spectra can exhibit respective mass tolerances for that quantitation ion and confirmation ion. Now, if there is at least one potentially-matching peak whose computed Q-C ion ratio is within a threshold percent-difference of the reference Q-C ion ratio and whose mass tolerances are below any suitable threshold tolerance, then the screening component can conclude that at least one of the potentially-matching peaks represents the selected targeted chemical compound (e.g., can conclude that at least one of the measured mass spectra exhibits more than the upper level of similarity with the reference mass spectra). Next, if every potentially-matching peak has a computed Q-C ion ratio that is outside the threshold percent-difference of the reference Q-C ion ratio and that has mass tolerances that are above the threshold tolerance, then the screening component can conclude that none of the potentially-matching peaks represents the selected targeted chemical compound (e.g., can conclude that all of the measured mass spectra exhibit less than the lower level of similarity with the reference mass spectra). Lastly, if neither of the two above-mentioned conditions is met (e.g., the only potentially-matching peaks that have computed Q-C ion ratios that are within the threshold percent-difference of the reference Q-C ion ratio have mass tolerances that are above the threshold tolerance), then the screening component can be inconclusive with respect to the presence or absence of the selected target chemical compound (e.g., can conclude that the measured mass spectra exhibit more than the lower level of similarity but less than the upper level of similarity with the reference mass spectra).

As another non-limiting example, the screening component can facilitate this similarity comparison based on library score computations. Specifically, the screening component can compute a respective library score (e.g., a reverse score, or a forward score) for each potentially-matching peak, where that library score can be a scalar whose magnitude indicates how much similarity there is between the measured mass spectrum of the potentially-matching peak and the reference mass spectrum. The screening component can compute the library scores using any suitable techniques (e.g., using cosine similarity, Euclidean distance, or peak matching). Now, if there is at least one potentially-matching peak whose library score is above an upper threshold score, then the screening component can conclude that at least one of the potentially-matching peaks represents the selected targeted chemical compound (e.g., can conclude that at least one of the measured mass spectra exhibits more than the upper level of similarity with the reference mass spectra). Next, if every potentially-matching peak has a library score that is below a lower threshold score, then the screening component can conclude that none of the potentially-matching peaks represents the selected targeted chemical compound (e.g., can conclude that all the measured mass spectra exhibit less than the lower level of similarity with the reference mass spectra). Lastly, if neither of the two above-mentioned conditions is met (e.g., the highest library score is greater than the lower threshold score but less than the upper threshold score), then the screening component can be inconclusive with respect to the presence or absence of the selected target chemical compound (e.g., can conclude that the measured mass spectra exhibit more than the lower level of similarity but less than the upper level of similarity with the reference mass spectra). For instance, according to the National Institute of Standards and Technology (NIST), two spectra that are perfectly matching can have a library score of 999, whereas two spectra that have no peaks in common can instead have a library score of 0. So, as a general guide, library scores of 900 or greater can indicate an excellent match, library scores between 800 and 900 can indicate a good match; library scores between 700 and 800 can indicate a fair match; library scores between 600 and 700 can indicate inconclusiveness; and library scores less than 600 can indicate a poor match.

In any case, the screening component can, during the current iteration, classify as present, absent, or neither each target chemical compound in the inconclusive running.

In various instances, the screening component can, during the current iteration, move from the inconclusive running list to the present running list whichever target chemical compounds that it has classified as present. Likewise, the screening component can, during the current iteration, move from the inconclusive running list to the absent running list whichever target chemical compounds that it has classified as absent.

In various aspects, the screening component can, during the current iteration, determine whether or not the inconclusive running list is now empty. If the inconclusive running list is not yet empty, a next or subsequent iteration of the iterative injection protocol can be commenced (e.g., a new portion of the loaded sample can be injected; the chromatograph-equipped mass spectrometer can scan that new portion using a scanning protocol that is temporally or ionically selective with respect to whichever target chemical compounds are still in the inconclusive running list, thereby yielding new measured mass spectrometry data; and the screening component can classify as present, absent, or neither the target chemical compounds in the inconclusive running list based on that new measured mass spectrometry data, as described above). Instead, if the inconclusive running list is now empty, each target chemical compound in the screening list can be considered as having been conclusively classified as present in or absent from the loaded sample. In particular, the present running list can be considered as containing all target chemical compounds that were classified as present, the absent running list can be considered as containing all target chemical compounds that were instead classified as absent, and the union of the present running list and the absent running list can be considered as being equivalent to the screening list. In other words, no inconclusive results can remain. Accordingly, the screening component can, in some cases, transmit or render the present running list or the absent running list to any suitable computing device or on any suitable electronic display, so that the user or technician associated with the chromatograph-equipped mass spectrometer can be made aware of the screening results.

Various embodiments described herein can be employed to use hardware or software to solve problems that are highly technical in nature (e.g., to facilitate inconclusive-triggered reinjection for mass spectrometry screening), that are not abstract and that cannot be performed as a set of mental acts by a human. Further, some of the processes performed can be performed by a specialized computer (e.g., chromatograph and mass spectrometer which can inject and scan portions of samples) for carrying out defined acts related to mass spectrometry.

For example, such defined acts can include: accessing, by a device operatively coupled to a processor, a screening list specifying a plurality of target chemical compounds; and classifying, by the device, respective ones of the plurality of target chemical compounds as being present or absent in a sample, based on causing a chromatograph and mass spectrometer to perform on the sample an iterative injection protocol whose subsequent iterations are progressively compound-selective and triggered by inconclusive presence or absence classifications from prior iterations.

In various aspects, such defined acts can comprise, during a current iteration of the iterative injection protocol: accessing, by the device, a first running list that includes only those of the plurality of target chemical compounds which have been classified as present in the sample during any previous iteration of the iterative injection protocol; accessing, by the device, a second running list that includes only those of the plurality of target chemical compounds which have been classified as absent in the sample during any previous iteration of the iterative injection protocol; and accessing, by the device, a third running list that includes only those of the plurality of target chemical compounds which have been neither classified as present nor classified as absent in the sample during any previous iteration of the iterative injection protocol.

In various instances, such defined acts can comprise, during the current iteration: causing, by the device, the chromatograph and mass spectrometer to inject a portion of the sample, to selectively scan that portion for each target chemical compound in the third running list, and to ignore each target chemical compound that is in either the first running or the second running list, thereby yielding current mass spectrometry data that exhibits heightened sensitivity with respect to the target chemical compounds in the third running list. In some cases, the chromatograph and mass spectrometer can perform the selective scanning via: selected ion monitoring that is directed to quantitation ions and confirmation ions associated with any of the target chemical compounds on the third running list; or full-scanning that is temporally truncated based on retention indices associated with any of the target chemical compounds on the third running list.

In various aspects, such defined acts can comprise, during the current iteration: classifying, by the device and based on comparing the current mass spectrometry data to reference mass spectrometry data corresponding to the screening list, each target chemical compound in the third running list as being present in the sample, as being absent in the sample, or as being neither present nor absent in the sample; moving, by the device and from the third running list to the first running list, whichever target chemical compounds that are classified as being present in the sample; moving, by the device and from the third running list to the second running list, whichever target chemical compounds that are classified as being absent in the sample; and maintaining, by the device, in the third running list whichever target chemical compounds are classified as being neither present nor absent in the sample.

In various instances, the current mass spectrometry data can comprise a chromatogram produced by the chromatograph and mass spectra produced by the mass spectrometer and respectively corresponding to peaks in the chromatogram, and the classifying the target chemical compounds in the third running list can comprise: computing, by the device, retention indices for the peaks of the chromatogram; selecting, by the device, a target chemical compound from the third running list; in response to no peak of the chromatogram having a retention index that is within a threshold margin of a reference retention index associated with the selected target chemical compound, classifying, by the device, the selected target chemical compound as being absent in the sample; in response to one or more first peaks of the chromatogram having retention indices within the threshold margin of the reference retention index, accessing, by the device, one or more first mass spectra respectively generated by the mass spectrometer for the one or more first peaks; in response at least one of the one or more first mass spectra satisfying presence classification criteria with respect to a reference mass spectrum associated with the selected target chemical compound, classifying, by the device, the selected target chemical compound as being present in the sample; in response to all of the one or more first mass spectra satisfying absence classification criteria with respect to the reference mass spectrum, classifying, by the device, the selected target chemical compound as being absent in the sample; and in response to all of the one or more first mass spectra failing to satisfy the presence criteria and at least one of the one or more first mass spectra failing to satisfy the absence criteria, classifying, by the device, the selected target chemical compound as being neither present nor absent in the sample. In various cases, the presence classification criteria or absence classification criteria can be based on: comparison of quantitation-to-confirmation ion ratios; or computation of library scores.

Such defined acts are inherently computerized. Indeed, chromatographs and mass spectrometers are highly-technical computerized devices comprising specific computerized hardware (e.g., temperature sensors, pressure sensors, voltage sensors, ion beam emitters, ion focusing lenses, mass analyzers, ion detectors). Neither a chromatograph-equipped mass spectrometer nor the operations that it performs can be implemented by the human mind, or by a human with pen and paper, in any reasonable or practicable way without computers (e.g., neither the human mind nor a human with pen and paper can inject portions of samples into or through the oven-heated columns, ionizers, mass analyzers, or detectors of a chromatograph-equipped mass spectrometer).

Moreover, various embodiments described herein can integrate into a practical application various teachings relating to inconclusive-triggered reinjection for mass spectrometry screening. As explained above, it can be desired to screen a sample for specified chemical compounds (e.g., known toxins or contaminants), by leveraging a chromatograph-equipped mass spectrometer. When existing techniques are implemented, the chromatograph-equipped mass spectrometer injects the sample and scans the sample using whatever scanning protocol that a user or technician selects. The user or technician then evaluates the resultant mass spectrometry data, to determine which of the specified compounds are present in the sample and which are instead absent from the sample. Due to noise or chemical ambiguity, the resultant mass spectrometry data might be inconclusive with respect to one or more of the specific chemical compounds (e.g., the user or technician can be unable to conclusively determine the presence or absence of those one or more specified chemical compounds). Thus, the user or technician might have the chromatograph-equipped mass spectrometer inject the sample again, thereby yielding new resultant mass spectrometry data, and will evaluate that new data in the hopes of remedying the prior inconclusiveness. Because it can take on the order of hours for the user or technician to evaluate any resultant mass spectrometry data, existing techniques can be considered as excessively time-consuming (e.g., it can sometimes require multiple days for existing techniques to go through a single screening list). Although such excessive time-consumption can be considered as undesirable in its own right, such excessive time consumption also renders existing techniques unsuitable for screening of unstable or short-shelf-life samples (e.g., biologic samples with unstable metabolites). After all, by the time that the user or technician eventually realizes that the resultant mass spectrometry data for an unstable or short-shelf-life sample is inconclusive for some specific chemical compounds, the unstable or short-shelf-life sample can be spoiled or stale, thus rendering user-initiated reinjection of the unstable or short-shelf-life sample useless. For at least these reasons, existing techniques can be considered as suffering from various technical problems.

Various embodiments described herein can help to ameliorate such technical problems by facilitating inconclusive-triggered reinjection for mass spectrometry screening. In particular, various embodiments described herein can be considered as a new or innovative software operating mode of a chromatograph-equipped mass spectrometer, which software operating mode can leverage an iterative injection protocol that prevents the chromatograph-equipped mass spectrometer from outputting to a user or technician any finalized mass spectrometry data that is inconclusive or ambiguous with respect to one or more specified screening compounds. Specifically, suppose that it is desired to screen a sample for a given list of chemical compounds. In such case, each iteration of the iterative injection protocol can include: causing the chromatograph-equipped mass spectrometer to inject a portion of the sample; causing the chromatograph-equipped mass spectrometer to scan the injected portion using a scanning protocol that is temporally selective (e.g., via a truncated full-scan protocol) or ionically selective (e.g., via a SIM protocol) with respect to whichever chemical compounds on the given list were classified as neither present nor absent in any preceding iteration, thereby yielding measured mass spectrometry data; and classifying as present, absent, or neither those neither-present-nor-absent chemical compounds based on comparing (e.g., via Q-C ion ratio computations, or via library score computations) the measured mass spectrometry data to reference mass spectrometry. Note that each iteration can be considered as having a temporally or ionically narrower monitoring window than the iteration that precedes it. Thus, each iteration can be considered as having increased chemical sensitivity than the iteration that precedes it. Stated differently, the likelihood or probability of any given iteration yielding inconclusive or ambiguous presence or absence results can be lower than that of the iteration that precedes it. In various aspects, such iterations can repeat until there are no more chemical compounds in the given list that are classified as neither present nor absent. In other words, such iterations can repeat until there are no more chemical compounds in the given list that are inconclusive. Accordingly, each subsequent or non-initial iteration of the iterative injection protocol can be considered as being "inconclusive-triggered".

Note that various embodiments described herein are distinct from existing techniques and can avoid or ameliorate various technical problems that afflict existing techniques. Indeed, the herein-described iterative injection protocol can be considered as a specific, innovative operating mode or screening strategy that can be implemented by the chromatograph-equipped mass spectrometer for any given sample and screening list. As described herein, such operating mode or screening strategy can involve informing the chromatograph-equipped mass spectrometer of the specific chemical compounds on the screening list. In stark contrast, existing techniques do not inform the chromatograph-equipped mass spectrometer of the specific chemical compounds on the screening list. Having access to or otherwise being informed of the specific chemical compounds on the screening list can allow or enable the chromatograph-equipped mass spectrometer to automatically customize, tailor, or narrow the scanning protocols (e.g., via progressive temporal truncation of a full-scan protocol; or via a progressively ionically-narrowed SIM protocol) that it uses in respective iterations to whichever chemical compounds in the screening list have been classified as neither present nor absent, thereby reducing the likelihood of obtaining inconclusive results as compared to prior iterations. In stark contrast, existing techniques involve no such automated customization, tailoring, or narrowing of scanning protocols from iteration to iteration. Additionally, as described herein, any given iteration of the iterative injection protocol can be automatically triggered by (e.g., can be performed in response to) inconclusiveness detected during the immediately preceding iteration, where such inconclusiveness can be measured in terms of Q-C ion ratios or library scores. In stark contrast, existing techniques involve no such automated inconclusiveness triggering. Moreover, the iterative injection protocol described-herein can be considered as preventing the chromatograph-equipped mass spectrometer from outputting to a user or technician finalized mass spectrometry data that is inconclusive or ambiguous with respect to any chemical compounds on the screening list. Thus, the user or technician need not waste hours of evaluation time only to arrive at inconclusive results, unlike with existing techniques. Lastly, the iterative injection protocol described herein can consume a total amount of time on the order of tens of minutes. In stark contrast, existing techniques, as mentioned above, can instead consume many hours or days. Thus, various embodiments can be employed to reliably or accurately screen unstable or short-shelf-life samples, whereas such samples most often become stale or spoiled before existing techniques complete such screening. In other words, various embodiments described herein enable a computerized device (e.g., a chromatograph-equipped mass spectrometer) to do things that it was previously incapable of doing (e.g., comprehensively screening an unstable or short-shelf-life sample prior to the sample becoming stale or spoiled).

For at least these reasons, various embodiments described herein can be considered as a concrete and tangible technical improvement in the field of mass spectrometry. Accordingly, various embodiments described herein certainly qualify as useful and practical applications of computers.

Furthermore, various embodiments described herein can control real-world tangible devices based on the disclosed teachings. For example, various embodiments described herein can electronically activate, deactivate, or otherwise actuate real-world hardware (e.g., sample injectors, ion beam emitters, ion focusing lenses, carrier fluid valves/pumps) of real-world scientific instruments (e.g., chromatographs, mass spectrometers, autosamplers).

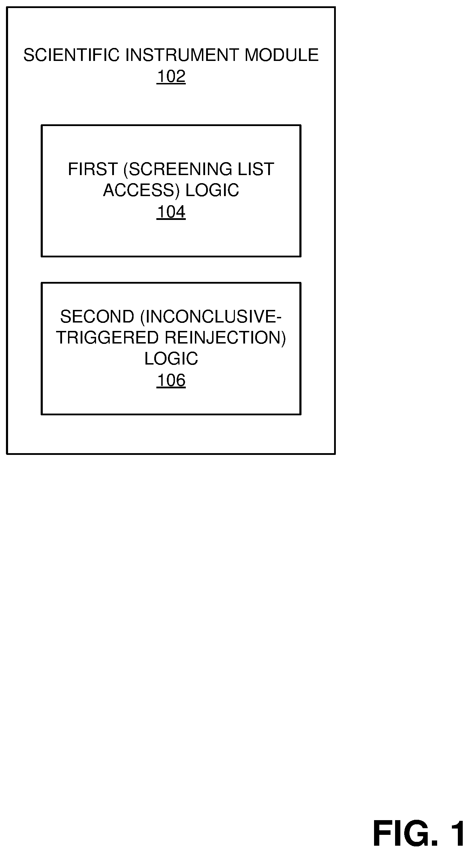

FIG. 1 illustrates an example, non-limiting block diagram of a scientific instrument module 102 in accordance with various embodiments described herein.

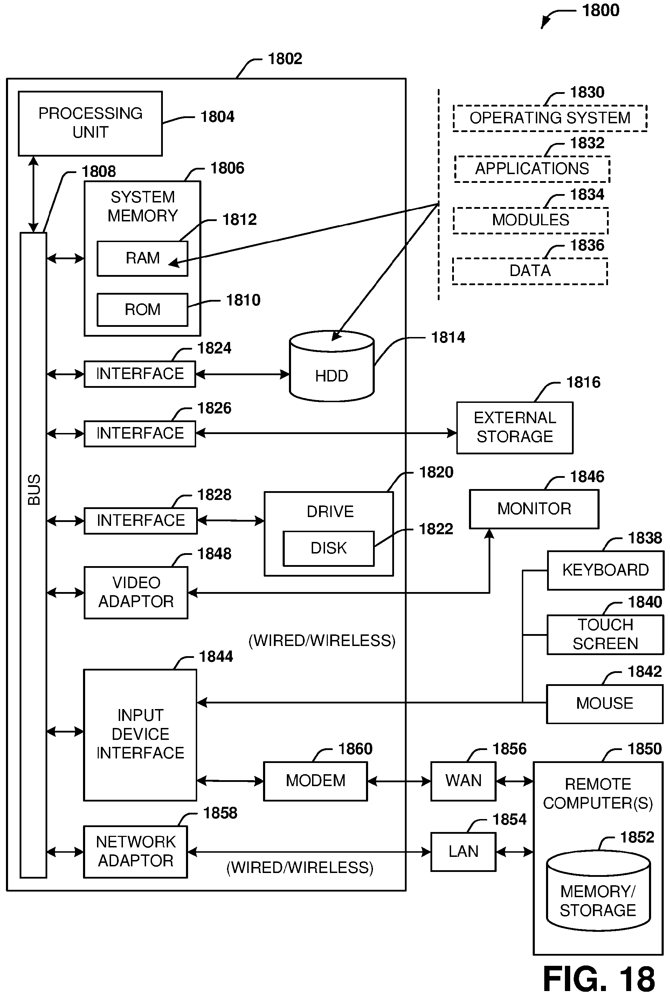

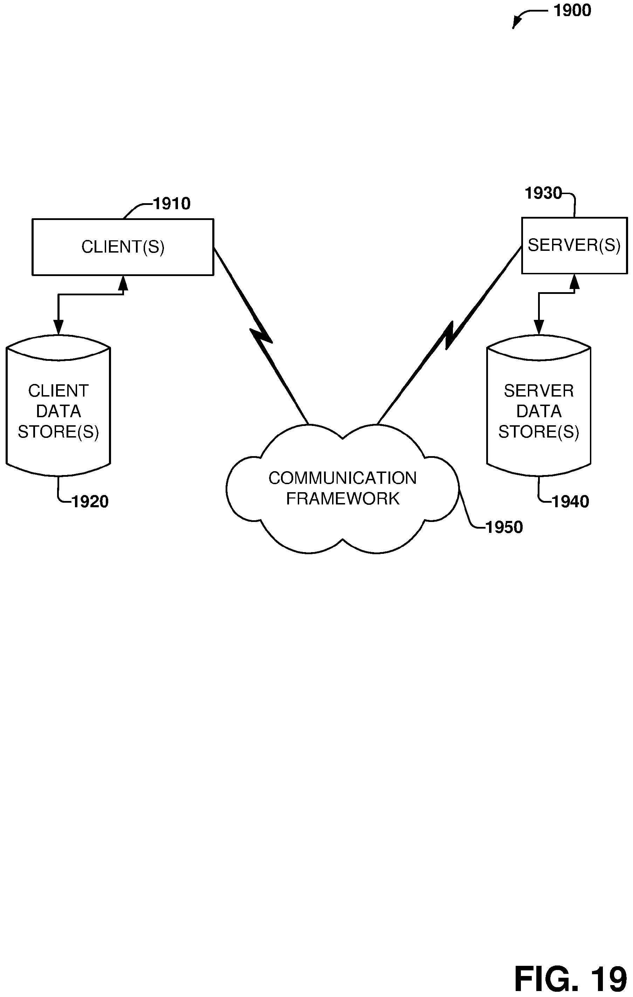

In various embodiments, the scientific instrument module 102 can be implemented by circuitry (e.g., including electrical or optical components), such as a programmed computing device. Logic of the scientific instrument module 102 can be included in a single computing device or can be distributed across multiple computing devices that are in communication with each other as appropriate. Examples of computing devices that may, singly or in combination, implement the scientific instrument module 102 are discussed herein with reference to FIG. 18, and examples of systems or networks of interconnected computing devices, in which the scientific instrument module 102 may be implemented across one or more of the computing devices, are discussed herein with reference to FIG. 19.

The scientific instrument module 102 can include first logic 104 and second logic 106. As used herein, the term "logic" can include an apparatus that is to perform a set of operations associated with the logic. For example, any of the logic elements included in the scientific instrument module 102 can be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" can refer to a collection of one or more logic elements that, together, perform a function associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module can omit one or more of the logic elements depicted in the associated drawings; for example, a module may include a subset of the logic elements depicted in the associated drawings when that module is to perform a subset of the operations discussed herein with reference to that module.

In various embodiments, there can be a scientific instrument corresponding to the scientific instrument module 102. In various aspects, the scientific instrument can be any suitable computerized device that can electronically measure some scientifically-relevant, clinically-relevant, or research-relevant characteristic, property, or attribute of an analytical sample (e.g., of a known or unknown mixture, compound, or collection of matter). As a non-limiting example, a scientific instrument can be a mass spectrometer that is operatively coupled to a chromatograph. In such case, the scientific instrument can measure or determine ion spectra (e.g., relative ion abundance as a function of mass-to-charge ratio) of the analytical sample.

In various embodiments, the first logic 104 can access, by a device operatively coupled to a processor, a screening list that specifies a plurality of target chemical compounds.

In various embodiments, the second logic 106 can classify, by the device, respective ones of the plurality of chemical compounds as being present or absent in a sample, based on causing the scientific instrument (e.g., a chromatograph and mass spectrometer) to perform on the sample an iterative injection protocol whose subsequent iterations are progressively compound-selective and triggered by inconclusive presence or absence classifications from prior iterations. In particular, during a current iteration of the iterative injection protocol, the second logic 106 can: cause the scientific instrument to inject a portion of the sample; cause the scientific instrument to scan the injected portion using a scanning protocol that is selective (e.g., via temporal truncation of a full-scan, or via a customized SIM) with respect to whichever target chemical compounds were classified as neither present nor absent in any preceding iteration, thereby yielding measured mass spectrometry data; classify as present, absent, or neither whichever target chemical compounds were classified as neither present nor absent in any preceding iteration, by comparing the measured mass spectrometry data to reference mass spectrometry data (e.g., by comparing measured to reference Q-C ion ratios, or by computing library scores); and proceeding to a following iteration if there are any target chemical compounds that are classified in the current iteration as being neither present nor absent in the sample. In this way, each iteration of the iterative injection protocol can be considered as being triggered or performed in response to inconclusiveness of a prior iteration. Moreover, the iterative injection protocol can be completed in mere minutes and can prevent the scientific instrument from outputting to a user or technician finalized mass spectrometry data that contains inconclusive screening results.

Accordingly, the scientific instrument module 102 can facilitate inconclusive-triggered reinjection for mass spectrometry screening.

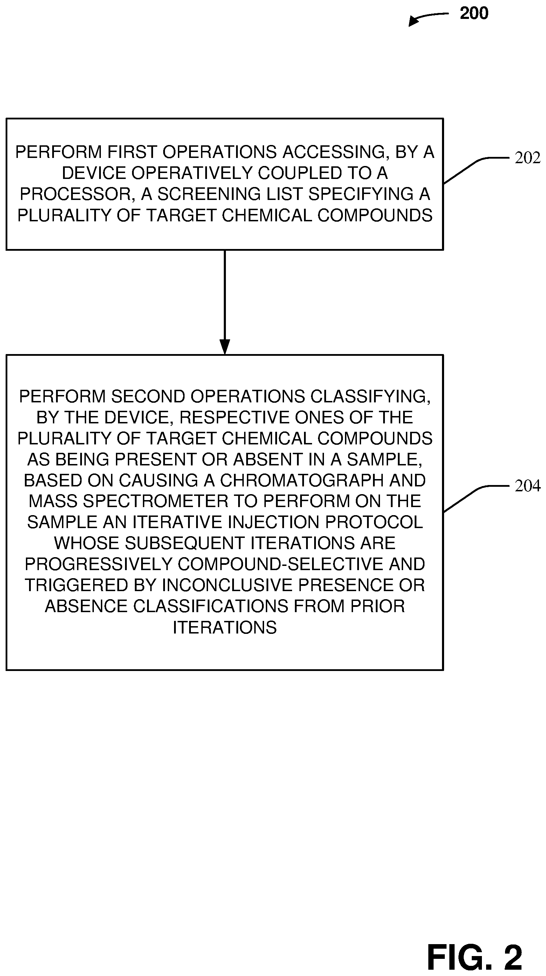

FIG. 2 is an example, non-limiting flow diagram of a computer-implemented method 200 in accordance with various embodiments described herein. The operations of the computer-implemented method 200 may be used in any suitable setting to perform any suitable operations (e.g., can be performed by or used in conjunction with any of the various modules, computing devices, or graphical user interfaces described with respect to of FIGs. 1, 18, or 19). Operations are illustrated once each and in a particular order in FIG. 2, but the operations may be reordered or repeated as desired and appropriate (e.g., different operations performed may be performed in parallel, as suitable).

In various aspects, act 202 can include performing first operations accessing, by a device operatively coupled to a processor, a screening list specifying a plurality of target chemical compounds. In various cases, the first logic 104 can perform or otherwise facilitate act 202.

In various instances, act 204 can include performing second operations classifying, by the device, respective ones of the plurality of target chemical compounds as being present or absent in a sample, based on causing a chromatograph and mass spectrometer to perform on the sample an iterative injection protocol whose subsequent iterations are progressively compound-selective and triggered by inconclusive presence or absence classifications from prior iterations. In various cases, the second logic 106 can perform or otherwise facilitate act 204.

Accordingly, the computer-implemented method 200 can facilitate inconclusive-triggered reinjection for mass spectrometry screening.

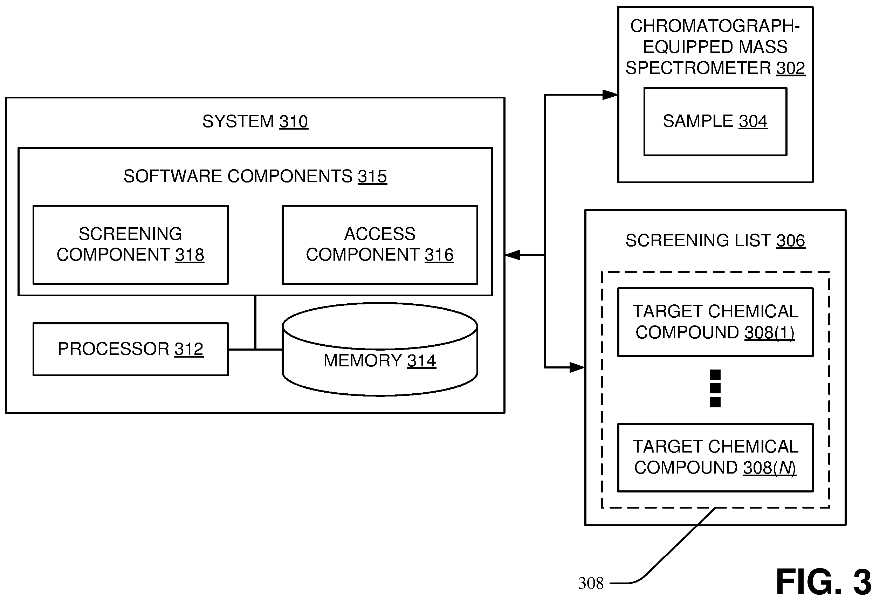

FIG. 3 illustrates a block diagram of an example, non-limiting system that can facilitate inconclusive-triggered reinjection for mass spectrometry screening in accordance with one or more embodiments described herein.

In various embodiments, there can be a chromatograph-equipped mass spectrometer 302. In various aspects, the chromatograph-equipped mass spectrometer 302 can, as its name suggests, comprise a mass spectrometer that is operatively coupled to a chromatograph.

In various embodiments, the chromatograph of the chromatograph-equipped mass spectrometer 302 can be any suitable chromatograph, such as a gas chromatograph or a liquid chromatograph. In various aspects, the chromatograph can comprise any suitable constituent hardware for separating an analytical sample into two or more compositional parts. As a non-limiting example, the constituent hardware can comprise an injector, an oven-heated column, and carrier fluid valves or pumps. In various aspects, the carrier fluid valves or pumps can cause carrier fluid (e.g., an inert gas, or a water-organic-solvent mixture) to flow through the chromatograph. In various instances, the injector can inject an analytical sample (e.g., a compound to be measured or analyzed) into the flowing carrier fluid. In various cases, the injected analytical sample can be carried by the flowing carrier fluid through the oven-heated column, which can contain any suitable absorbent packing material or stationary phase film. In various aspects, different compositional parts (e.g., different elements or molecules) of the analytical sample can interact differently or uniquely with the absorbent packing material or stationary phase film, thereby causing the different compositional parts of the analytical sample to have different flow rates through the oven-heated column. Due to such different flow rates, the different compositional parts can be considered as being physically separated from each other.

In various aspects, the mass spectrometer of the chromatograph-equipped mass spectrometer 302 can be any suitable mass spectrometer. In various instances, the mass spectrometer can comprise any suitable constituent hardware for measuring ion spectra of analytical samples. As a non-limiting example, the constituent hardware can comprise an ion beam emitter, ion optics equipment, a mass analyzer, and an ion detector. In various cases, the ion beam emitter can receive from the chromatograph a compositional part of the analytical sample and can ionize that compositional part into an ion beam. The ion beam emitter can facilitate this via any suitable ionization technique, such as electron ionization, chemical ionization, matrix assisted laser desorption ionization, electrospray ionization, photoionization, or inductively coupled plasma ionization, any of which can be implemented in a vacuum or at atmospheric pressure. In various aspects, the ion optics equipment can channel or steer the ion beam produced by the ion beam emitter through the mass analyzer and to the ion detector. Non-limiting examples of such ion optics equipment can include ion focusing lenses, ion guides, or ion deflectors. In various instances, the mass analyzer can separate or sort whatever ions are present in the ion beam according to their mass-to-charge ratios. Non-limiting examples of the mass analyzer can include quadrupole mass analyzers, time-of-flight mass analyzers, magnetic sector mass analyzers, electrostatic sector mass analyzers, quadrupole ion trap mass analyzers, or ion cyclotron resonance mass analyzers. In various cases, the ion detector can electronically detect or measure the relative abundances of whatever ions strike it. Non-limiting examples of the ion detector can include electron multiplier ion detectors or Faraday cup ion detectors.

In various embodiments, the chromatograph-equipped mass spectrometer 302 can be currently or presently loaded with a sample 304. In other words, the sample 304 can be physically within any suitable injector or autosampler of the chromatograph-equipped mass spectrometer 302, such that the chromatograph-equipped mass spectrometer 302 can be able to inject portions of the sample 304 for analysis or scanning. In various aspects, the sample 304 can be any suitable mixture, solution, or colloid for which mass spectrometry analysis is desired. As a non-limiting example, the sample 304 can be a food or beverage mixture, solution, or colloid. As another non-limiting example, the sample 304 can be a pharmaceutical or medicinal mixture, solution, or colloid. As yet another non-limiting example, the sample 304 can be a soil, water, air, scat, or other environmental mixture, solution, or colloid. In various instances, the sample 304 can have or exhibit any suitable stability or shelf-life. Indeed, in some cases, the sample 304 can be a stable mixture, solution, or colloid that has a shelf-life of days, weeks, months, or even years. In other cases, the sample 304 can instead be an unstable mixture, solution, or colloid that has a shelf-life of mere hours or minutes.

In various embodiments, there can be a screening list 306. In various aspects, the screening list 306 can be any suitable electronic data having any suitable format, size, or dimensionality (e.g., can be one or more scalars, one or more vectors, one or more matrices, one or more tensors, one or more character strings, or any suitable combination thereof) that can indicate, specify, or otherwise represent a plurality of target chemical compounds 308. In various instances, the plurality of target chemical compounds 308 can comprise n compounds, for any suitable positive integer $n > 1$: a target chemical compound 308(1) to a target chemical compound 308(n). In various cases, each of the plurality of target chemical compounds 308 can be any suitable chemical compound or molecule for which the sample 304 is desired to be screened or searched. As a non-limiting example, any of the plurality of target chemical compounds 308 can be any suitable known toxins, poisons, or other dangerous or hazardous molecules that are desired to not be present in the sample 304. As another non-limiting example, any of the plurality of target chemical compounds 308 can be any suitable known organic or inorganic contaminants that are expected to not be present in the sample 304. As even another non-limiting example, any of the plurality of target chemical compounds 308 can be any suitable chemical additive or enhancing agent that is desired or expected to be present in the sample 304.

In any case, it can be desired to screen the sample 304 according to the screening list 306. In other words, it can be desired to conclusively determine which of the plurality of target chemical compounds 308 are present in the sample 304 and which are absent from the sample 304. As described herein, a system 310 can facilitate or otherwise accomplish such screening in an automated and time-efficient fashion.

In various aspects, the system 310 can comprise a processor 312 (e.g., computer processing unit, microprocessor) and a non-transitory computer-readable memory 314 that is operably or operatively or communicatively connected or coupled to the processor 312. The non-transitory computer-readable memory 314 can store computer-executable instructions which, upon execution by the processor 312, can cause the processor 312 or other components of the system 310 (e.g., access component 316, screening component 318) to perform one or more acts. In various embodiments, the non-transitory computer-readable memory 314 can store computer-executable components (e.g., access component 316, screening component 318), and the processor 312 can execute the computer-executable components.

In various embodiments, the system 310 can comprise an access component 316. In various aspects, the access component 316 can electronically access the chromatograph-equipped mass spectrometer 302. That is, the access component 316 can electronically communicate or otherwise electronically interact with (e.g., transmit electronic instructions or commands to, receive electronic data from) the chromatograph-equipped mass spectrometer 302. Accordingly, the access component 316 can be considered as a proxy or conduit through which other components of the system 310 can interact with, communicate with, or otherwise manipulate the chromatograph-equipped mass spectrometer 302. In various instances, the access component 316 can electronically access the screening list 306. That is, the access component 316 can electronically receive, electronically retrieve, or otherwise electronically obtain the screening list 306, from any suitable electronic source or database (e.g., possibly from a computerized workstation associated with the chromatograph-equipped mass spectrometer 302). In any case, the access component 316 can be considered as a proxy or conduit through which other components of the system 310 can interact with, control, or otherwise manipulate the screening list 306.

In various embodiments, the system 310 can comprise a screening component 318. In various aspects, the screening component 318 can, as described herein, respectively classify each of the plurality of target chemical compounds 308 as being present or absent in the sample 304, by causing the chromatograph-equipped mass spectrometer 302 to perform on the sample 304 an iterative injection protocol whose iterations are progressively compound-selective and triggered by inconclusiveness.

Note that, in various instances, the access component 316 and the screening component 318 can collectively be considered as being one or more software components 315 of the system 310. In various aspects, it should be appreciated that the one or more software components 315 are described primarily herein as comprising two components (e.g., the access component 316 and the screening component 318) for ease of explanation and illustration. However, the one or more software components 315 are not limited to being implemented as exactly such two components in every embodiment. Indeed, in some embodiments, the functionalities described herein of such two components can be combined in any suitable fashions, so as to be implemented in or by fewer than two components (e.g., in some cases, a single component can perform all of the functionalities that are described herein with respect to the access component 316 and the screening component 318). In other embodiments, the functionalities described herein of such two components can instead be distributed, separated, split, or fragmented in any suitable fashions, so as to be implemented in or by more than two components (e.g., two or more components can facilitate the functionalities that are performable by the access component 316; two or more components can facilitate the functionalities that are performable by the screening component 318).

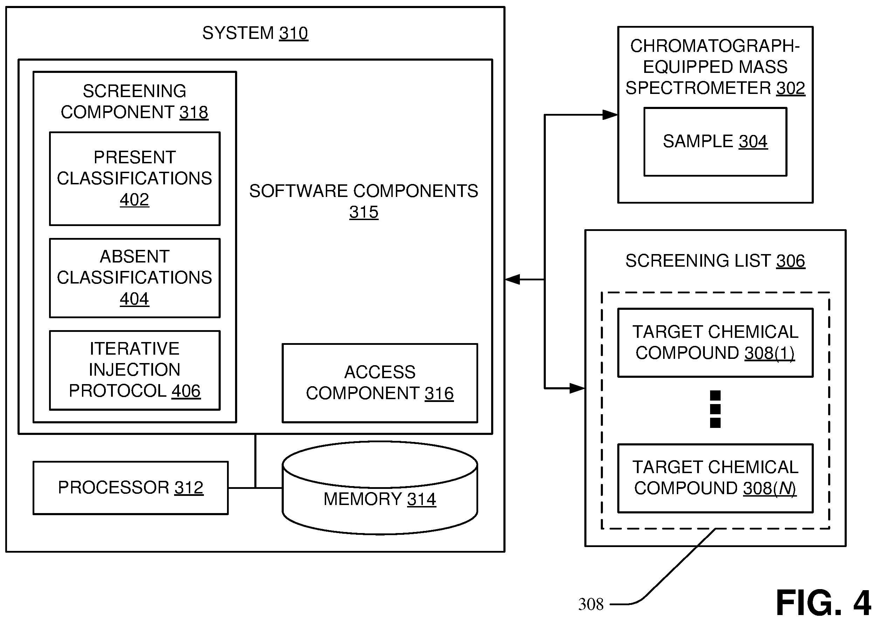

FIG. 4 illustrates a block diagram of an example, non-limiting system including an iterative injection protocol that can facilitate inconclusive-triggered reinjection for mass spectrometry screening in accordance with one or more embodiments described herein.

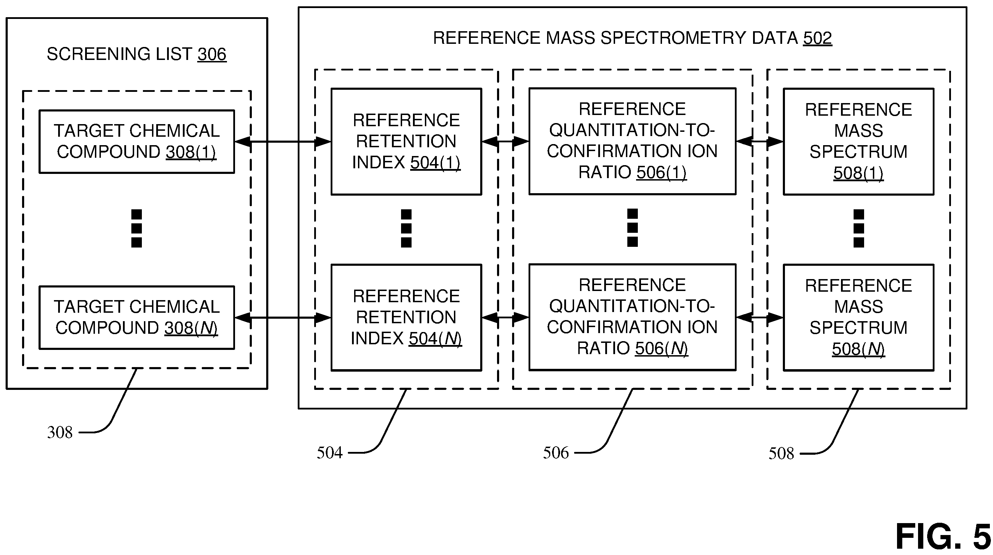

In various embodiments, the screening component 318 can electronically identify a set of present classifications 402 and a set of absent classifications 404. In various aspects, the set of present classifications 402 can comprise any suitable number of classification labels each of which can indicate that a respective one of the plurality of target chemical compounds 308 is determined or concluded to be present within the sample 304. Similarly, in various instances, the set of absent classifications 404 can comprise any suitable number of classification labels each of which can indicate that a respective one of the plurality of target chemical compounds 308 is determined or concluded to be absent from the sample 304. In various cases, the set of present classifications 402 can be disjoint (e.g., non-overlapping) with the set of absent classifications 404. In other words, there can be no target chemical compound that is classified as being both present in and absent from the sample 304. In various cases, the union of the set of present classifications 402 and the set of absent classifications 404 can be equivalent to the screening list 306. In other words, there can ultimately or eventually be no target chemical compounds that are determined or concluded to be neither present in nor absent from the sample 304. In various aspects, the screening component 318 can identify the set of present classifications 402 and the set of absent classifications 404, by causing the chromatograph-equipped mass spectrometer 302 to perform an iterative injection protocol 406. Non-limiting aspects regarding the iterative injection protocol 406 are described with respect to FIGs. 5-12.

FIGs. 5-12 illustrate example, non-limiting block diagrams showing how the iterative injection protocol 406 can be facilitated in accordance with one or more embodiments described herein.

First, consider FIG. 5. In various embodiments, as shown, the screening list 306 can be considered as corresponding to reference mass spectrometry data 502. In various aspects, the reference mass spectrometry data 502 can comprise any suitable attributes, properties, or characteristics that are known to be exhibited or possessed by respective ones of the plurality of target chemical compounds 308. Indeed, in some instances, the reference mass spectrometry data 502 can comprise a plurality of reference retention indices 504, a plurality of reference quantitation-to-confirmation ion ratios 506 (hereafter "plurality of reference Q-C ion ratios 506"), or a plurality of reference mass spectra 508.

In various aspects, the plurality of reference retention indices 504 can respectively correspond to the plurality of target chemical compounds 308. Thus, since the plurality of target chemical compounds 308 can include n compounds, the plurality of reference retention indices 504 can likewise comprise n indices: a reference retention index 504(1) to a reference retention index 504(n). In various instances, each of the plurality of reference retention indices 504 can be or indicate a known retention index of a respective one of the plurality of target chemical compounds 308. As a non-limiting example, the reference retention index 504(1) can correspond to the target chemical compound 308(1). So, the reference retention index 504(1) can be a scalar whose magnitude or value represents or indicates how the retention time of the target chemical compound 308(1) (e.g., how much time the target chemical compound 308(1) spends in the stationary phase or column of a given chromatograph) is known to relate to the retention time of a standard or baseline chemical compound (e.g., an n-alkane) under any given chromatographic conditions. As another non-limiting example, the reference retention index 504(n) can correspond to the target chemical compound 308(n). Thus, the reference retention index 504(n) can be a scalar whose magnitude or value represents or indicates how the retention time of the target chemical compound 308(n) is known to relate to the retention time of the standard or baseline chemical compound under any given chromatographic conditions.

Note that retention times can vary across chromatographic conditions (e.g., across different stationary phases of columns; across different column dimensions such as length, internal diameters, or film thickness; across different oven-programmed data acquisition temperatures). In contrast, retention indices do not vary across chromatographic conditions. Indeed, retention indices do not change as long as column stationary phase is the same, and so retention indices can be considered as being much more reproducible than retention times. Accordingly, for any specific chromatographic conditions, if the retention time of the standard or baseline chemical compound is known, then the retention times of the plurality of target chemical compounds 308 can be inferred or computed, by respectively applying (e.g., multiplying) the plurality of reference retention indices 504 to the retention time of the standard or baseline chemical compound. As a non-limiting example, suppose that the plurality of reference retention indices 504 are defined with respect to a standard or baseline n-alkane solution. In such case, that standard or baseline n-alkane solution can be injected into the chromatograph-equipped mass spectrometer 302, and the specific retention time that such standard or baseline n-alkane solution exhibits under the particular chromatographic conditions associated with the chromatograph-equipped mass spectrometer 302 can be measured (e.g., can be derived from a chromatogram produced by the chromatograph-equipped mass spectrometer 302 in response to injection of the standard or baseline n-alkane solution). In such case, the retention time that the target chemical compound 308(1) would exhibit if injected into the chromatograph-equipped mass spectrometer 302 can be equal to or otherwise based on the multiplicative product between: the measured specific retention time of the standard or baseline n-alkane solution; and the reference retention index 504(1). Likewise, the retention time that the target chemical compound 308(n) would exhibit if injected into the chromatograph-equipped mass spectrometer 302 can be equal to or otherwise based on the multiplicative product between: the measured specific retention time of the standard or baseline n-alkane solution; and the reference retention index *504(n)*.

In various aspects, the plurality of reference Q-C ion ratios 506 can respectively correspond to the plurality of target chemical compounds 308. Thus, since the plurality of target chemical compounds 308 can include n compounds, the plurality of reference Q-C ion ratios 506 can likewise comprise n ratios: a reference Q-C ion ratio 506(1) to a reference Q-C ion ratio 506(n). In various instances, each of the plurality of reference Q-C ion ratios 506 can be or indicate a known ratio or relationship between the abundance or intensity of a designated quantitation ion and the abundance or intensity of a designated confirmation ion of a respective one of the plurality of target chemical compounds 308. As a non-limiting example, the reference Q-C ion ratio 506(1) can correspond to the target chemical compound 308(1). So, the target chemical compound 308(1) (e.g., toluene) can be considered as having a designated quantitation ion (e.g., $C_7H_7+$) and as also having a designated confirmation ion (e.g., $C_7H_8+$), and the reference Q-C ion ratio 506(1) can be a scalar whose magnitude or value represents or indicates how the abundance or intensity of that designated quantitation ion is known to relate to the abundance or intensity of that designated confirmation ion (or vice versa) under any given chromatographic conditions. As another non-limiting example, the reference Q-C ion ratio 506(n) can correspond to the target chemical compound 308(n). So, the target chemical compound 308(n) (e.g., acetaminophen) can be considered as having some designated quantitation ion (e.g., $C_8H_9NO_2+$) and as also having some designated con-

firmation ion (e.g., $C_6H_7NO+$), and the reference Q-C ion ratio 506(n) can be a scalar whose magnitude or value represents or indicates how the abundance or intensity of that designated quantitation ion is known to relate to the abundance or intensity of that designated confirmation ion (or vice versa) under any given chromatographic conditions.

Note that any two of the plurality of target chemical compounds 308 can have the same or different quantitation ions or confirmation ions as each other. Stated differently, any given ion can be designated as: a quantitation ion of one or more of the plurality of target chemical compounds 308; or a confirmation ion of one or more of the plurality of target chemical compounds 308.

Furthermore, note that, in some cases, any given target chemical compound in the screening list 306 can have more than one designated quantitation ion or more than one designated confirmation ion. In such situations, that given target chemical compound could thus correspond to more than one reference Q-C ion ratio, depending upon how many different quantitation-confirmation combinations there are for that given target chemical compound. As a non-limiting example, suppose that the given target chemical compound has two different quantitation ions and three different confirmation ions. In such case, that given target chemical compound can be considered as having a total of six different Q-C ion ratios (e.g., in this example, there can be two choices of quantitation ion and three choices of confirmation ion for forming a Q-C ion ratio for the given target chemical compound). In various aspects, all of such six different Q-C ion ratios can be indicated in the reference mass spectrometry data 502.

In various instances, the plurality of reference mass spectra 508 can respectively correspond to the plurality of target chemical compounds 308. Thus, since the plurality of target chemical compounds 308 can include n compounds, the plurality of reference mass spectra 508 can likewise comprise n spectra: a reference mass spectrum 508(1) to a reference mass spectrum 508(n). In various instances, each of the plurality of reference mass spectra 508 can be a known plot of ion abundance or intensity versus mass-to-charge ratio for a respective one of the plurality of target chemical compounds 308. As a non-limiting example, the reference mass spectrum 508(1) can correspond to the target chemical compound 308(1). So, the reference mass spectrum 508(1) can be considered as showing which mass-to-charge ratios (e.g., which specific ions) are known to be more or less prevalent or abundant in the target chemical compound 308(1). As another non-limiting example, the reference mass spectrum 508(n) can correspond to the target chemical compound 308(n). Thus, the reference mass spectrum 508(n) can be considered as showing which mass-to-charge ratios are known to be more or less prevalent or abundant in the target chemical compound 308(n).

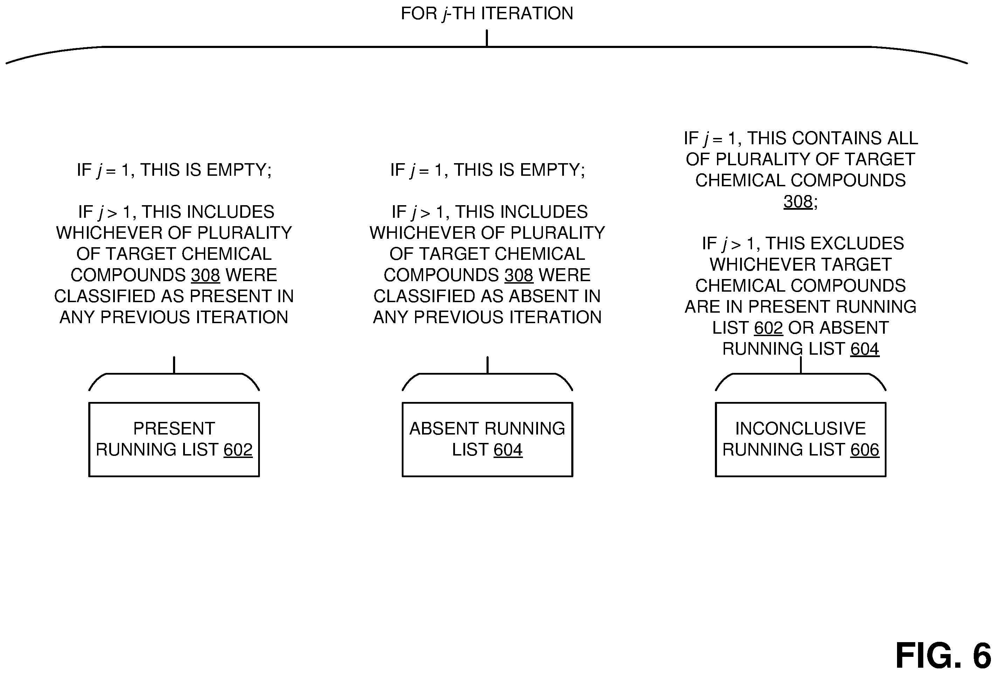

In various embodiments, each iteration of the iterative injection protocol 406 can involve classifying respective ones of the plurality of target chemical compounds 308 as present, absent, or neither, by leveraging or otherwise making use of the reference mass spectrometry data 502. Non-limiting details regarding how a j-th iteration of the iterative injection protocol 406 can be performed are described with respect to FIGs. 6-11, for any suitable positive integer $j$.

Consider FIG. 6. In various embodiments, the screening component 318 can, during the j-iteration of the iterative injection protocol 406, electronically receive, electronically retrieve, electronically obtain, or otherwise electronically access a present running list 602, an absent running list 604, or an inconclusive running list 606.

In various aspects, the present running list 602 can be an electronic list that can be updated with each iteration of the iterative injection protocol 406 (hence the term "running") and that can indicate which of the plurality of target chemical compounds 308 have already been determined or classified to be present within the sample 304 (hence the term "present"). In particular, for $j = 1$ (e.g., for the very first, beginning, or initial iteration of the iterative injection protocol 406), the present running list 602 can be empty. In contrast, for $j > 1$ (e.g., for any subsequent or non-initial iteration of the iterative injection protocol 406), the present running list 602 can contain or include whichever of the plurality of target chemical compounds 308 have been or were classified by the screening component 318 in any preceding iteration of the iterative injection protocol 406 as being present within the sample 304.

Similarly, in various instances, the absent running list 604 can be an electronic list that can be updated with each iteration of the iterative injection protocol 406 (hence the term "running") and that can indicate which of the plurality of target chemical compounds 308 have already been determined or classified to be absent from the sample 304 (hence the term "absent"). In particular, for $j = 1$ (e.g., for the very first, beginning, or initial iteration of the iterative injection protocol 406), the absent running list 604 can be empty. In contrast, for $j > 1$ (e.g., for any subsequent or non-initial iteration of the iterative injection protocol 406), the absent running list 604 can contain or include whichever of the plurality of target chemical compounds 308 have been or were classified by the screening component 318 in any preceding iteration of the iterative injection protocol 406 as being absent from the sample 304.

In various cases, the inconclusive running list 606 can be an electronic list that can be updated with each iteration of the iterative injection protocol 406 (hence the term "running") and that can indicate which of the plurality of target chemical compounds 308 have neither been determined or classified to be present within nor absent from the sample 304. In other words, the inconclusive running list 606 can indicate which of the plurality of target chemical compounds 308 for which the screening component 318 has so far been unable to make a conclusive presence or absence determination or classification (hence the term "inconclusive"). In particular, for $j = 1$ (e.g., for the very first, beginning, or initial iteration of the iterative injection protocol 406), the inconclusive running list 606 can be equivalent to the screening list. That is, for $j = 1$, the inconclusive running list 606 can omit or exclude none of the plurality of target chemical compounds 308. In contrast, for $j > 1$ (e.g., for any subsequent or non-initial iteration of the iterative injection protocol 406), the inconclusive running list 606 can exclude or omit whichever of the plurality of target chemical compounds 308 are in the present running list 602 or are in the absent running list 604. That is, during the j-th iteration, the inconclusive running list 606 can be obtained by subtracting: the union of the present running list 602 and the absent running list 604; from the screening list 306.

Stated differently, the present running list 602 can be considered as keeping track of which target chemical compounds are conclusively classified as present in the sample 304, the absent running list 604 can be considered as keeping track of which target chemical compounds are conclusively classified as being absent from the sample 304, and the inconclusive running list 606 can be considered as keeping track of any remaining target chemical compounds (e.g., of any target chemical compounds that have been determined to me neither whatever criteria define presence in the sample 304 nor whatever criteria define absence in the sample 304).

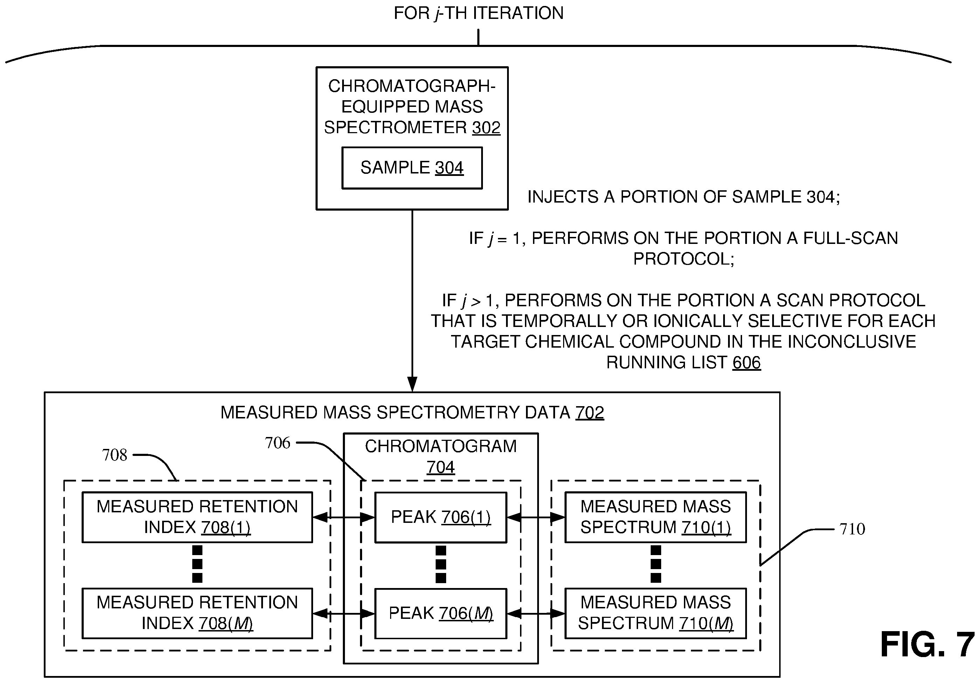

Next, consider FIG. 7. During the j-th iteration, the screening component 318 can electronically command, electronically instruct, or otherwise electronically cause the chromatograph-equipped mass spectrometer 302 to inject a portion of the sample 304 and to perform on that injected portion a scanning protocol that can depend upon previous iterations of the iterative injection protocol 406. Specifically, for $j = 1$ (e.g., for the very first, beginning, or initial iteration of the iterative injection protocol 406), the chromatograph-equipped mass spectrometer 302 can perform on the injected portion a full-scan protocol. In other words, for j = 1, the chromatograph-equipped mass spectrometer 302 can be considered as scanning the injected portion using a temporally unrestricted and ionically unrestricted monitoring window. In contrast, for $j > 1$ (e.g., for any subsequent or non-initial iteration of the iterative injection protocol 406), the chromatograph-equipped mass spectrometer 302 can perform on the injected portion a scanning protocol that exhibits or demonstrates heightened sensitivity to whichever target chemical compounds are in the inconclusive running list 606.

In some cases, such heightened sensitivity can be accomplished via temporal truncation of a full-scan protocol. In particular, for each given target chemical compound in the inconclusive running list 606, the reference mass spectrometry data 502 can indicate a respective reference retention index (e.g., one of 504) for the given target chemical compound. As explained above, such reference retention index can be used (in conjunction with a standard or baseline compound injection which can be performed by the chromatograph-equipped mass spectrometer 302 prior to starting or commencing the iterative injection protocol 406) to infer or calculate what retention time the given target chemical compound would exhibit or have if it were injected through the chromatograph-equipped mass spectrometer 302. In this way, a respective retention time can be computed or inferred for each target chemical compound in the inconclusive running list 606. In various aspects, the screening component 318 can instruct, command, or cause the chromatograph-equipped mass spectrometer 302 to perform a full-scan protocol that is temporally truncated, such that the full-scan protocol is performed only: at the computed retention times of the target chemical compounds that are in the inconclusive running list 606; within any suitable threshold margin or window before such computed retention times; or within any suitable threshold margin or window after such computed retention times. As a non-limiting example, suppose that the inconclusive running list 606 includes only: a target chemical compound A having a retention time of $t_A$ seconds for any suitable positive real number $t_A$; and a target chemical compound B having a retention time of $t_B$ seconds for any suitable positive real number $t_B > t_A$. Moreover, suppose that the threshold margin or window in such case is wseconds, for any suitable positive real number w. Accordingly, the temporally truncated full-scan protocol can be performed only at all times twhere:

$$t \in [t_A - \frac{w}{2}, t_A + \frac{w}{2}] \cup [t_B - \frac{w}{2}, t_B + \frac{w}{2}]$$

In such case, the chromatograph-equipped mass spectrometer 302 can be considered as ignoring, not actively detecting, not measuring, or otherwise not paying attention to any compounds or ions that strike its detectors at times that are far from (e.g., outside the w-second window of) the retention times of the target chemical compounds in the inconclusive running list 606. This can, in some cases, cause the sensitivity of the chromatograph-equipped mass spectrometer 302 to be heightened or increased at or near those retention times than such sensitivity otherwise would have been in an untruncated full-scan protocol. In other words, temporal truncation of a full-scan protocol can, in some instances, cause the chromatograph-equipped mass spectrometer 302 to become more selective or sensitive with respect to the target chemical compounds in the inconclusive running list 606. In some cases, this can be referred to as temporal selectivity.

In other cases, such heightened sensitivity can be accomplished via a SIM protocol whose monitoring window includes quantitation or confirmation ions of the target chemical compounds in the inconclusive running list 606. In particular, for each given target chemical compound in the inconclusive running list 606, the reference mass spectrometry data 502 can indicate (e.g., via 506) one or more quantitation ions or one or more confirmation ions that are designated or otherwise known to be associated with the given target chemical compound. In various aspects, the screening component 318 can instruct, command, or cause the chromatograph-equipped mass spectrometer 302 to perform a SIM protocol whose monitoring window is narrowed to include only the quantitation ions or confirmation ions of the target chemical compounds in the inconclusive running list 606. As a non-limiting example, suppose that the inconclusive running list 606 includes only: a target chemical compound A having a quantitation ion $Q_A$ and a confirmation ion $C_A$; and a target chemical compound B having a quantitation ion $Q_B$ and a confirmation ion $C_B$. Accordingly, the SIM protocol can be performed using a monitoring window that is narrowed to include only mass-to-charge ratios that are: equal to the known mass-to-charge ratios of $Q_A$, $C_A$, $Q_B$, or $C_B$; or within any suitable threshold margin or proximity of the known mass-to-charge ratios of $Q_A$, $C_A$, $Q_B$, or $C_B$. In such case, the chromatograph-equipped mass spectrometer 302 can be considered as ignoring, not actively detecting, not measuring, or otherwise not paying attention to any ions that strike its detectors whose mass-to-charge ratios fall outside such narrowed window. This can, in some cases, cause the sensitivity of the chromatograph-equipped mass spectrometer 302 to be heightened or increased at or near the known mass-to-charge ratios of the quantitation ions or confirmation ions that are designated for the target chemical compounds in the inconclusive running list 606 than such sensitivity otherwise would have been in a full-scan protocol. In other words, such ionic narrowing of the monitoring window of a SIM protocol can, in some instances, cause the chromatograph-equipped mass spectrometer 302 to become more selective or sensitive with respect to the target chemical compounds in the inconclusive running list 606. In some cases, this can be referred to as ionic selectivity.

Note that, in some aspects in which a SIM protocol is implemented as described above, any given target chemical compound might correspond to multiple quantitation ions or multiple confirmation ions. In such situations, sensitivity of the SIM protocol to the given target chemical compound might be increased by narrowing the monitoring window of the SIM protocol to include fewer than all of those multiple quantitation ions or fewer than all of those multiple confirmation ions. Indeed, in situations where the given target chemical compound is in the inconclusive running list 606 for multiple consecutive iterations, the first of such multiple consecutive iterations can involve a SIM protocol whose monitoring window includes all of those multiple quantitation ions and all of those multiple confirmation ions; a second one of those multiple consecutive iterations can involve a SIM protocol whose monitoring window includes one fewer of those multiple quantitation ions (though still includes at least one quantitation ion) or one fewer of those multiple confirmation ions (though still includes at least one confirmation ion); a third one of those multiple consecutive iterations can involve a SIM protocol whose monitoring window includes two fewer of those multiple quantitation ions (though still includes at least one quantitation ion) or two fewer of those multiple confirmation ions (though still includes at least one confirmation ion), and so on. In other words, the sensitivity of the SIM protocol to the given target chemical compound can be incrementally increased by incrementally excluding from the monitoring window quantitation ions or confirmation ions designated for the given target chemical compound.

As a non-limiting example, suppose that the inconclusive running list 606 includes only a target chemical compound A having a first quantitation ion $Q_{A1}$, a second quantitation ion $Q_{A2}$, a first confirmation ion $C_{A1}$, a second confirmation ion $C_{A2}$, and a third confirmation ion $C_{A3}$. During the j-th iteration of the iterative injection protocol 406, the chromatograph-equipped mass spectrometer 302 can perform a SIM protocol whose monitoring window includes only mass-to-charge ratios that are at or around those of $Q_{A1}$, $Q_{A2}$, $C_{A1}$, $C_{A2}$, and $C_{A3}$. If the target chemical compound A is still in the inconclusive running list 606 during the $(j + 1)$-th iteration, then the monitoring window of the SIM protocol can be incrementally narrowed to include one fewer quantitation ion or one fewer confirmation ion of the target chemical compound A. For instance, the chromatograph-equipped mass spectrometer 302 can perform during the $(j + 1)$-th iteration a SIM protocol whose monitoring window includes only mass-to-charge ratios that are at or around those of $Q_{A1}$, $C_{A1}$, and $C_{A2}$. Likewise, if the target chemical compound A is still in the inconclusive running list 606 during the $(j + 2)$-th iteration, then the monitoring window of the SIM protocol can be incrementally narrowed again to include one fewer confirmation ion of the target chemical compound A (since it can be beneficial to always include at least one quantitation ion and at least one confirmation ion for each target chemical compound that is being screened, no more quantitation ions of the target chemical compound A should be removed). For instance, the chromatograph-equipped mass spectrometer 302 can perform during the $(j + 2)$-th iteration a SIM protocol whose monitoring window includes only mass-to-charge ratios that are at or around those of $Q_{A1}$ and $C_{A2}$.

It should be appreciated that such incremental narrowing of the monitoring window of the SIM protocol can be accomplished in any suitable order of priority. For example, such incremental narrowing can be performed in a random ionic order (e.g., randomly choose which quantitation ions or confirmation ions to ignore for any given target chemical compound). As another example, such incremental narrowing can be performed in order of increasing or decreasing ionic mass-to-charge ratio (e.g., ignoring the quantitation ions or confirmation ions for any given target chemical compound that have the highest or lowest mass-to-charge ratios). As yet another example, such incremental narrowing can be performed in order of increasing or decreasing ionic abundance or intensity (e.g., ignoring the quantitation ions or confirmation ions for any given target chemical compound that have the highest or lowest relative abundances or intensities).

In yet other cases, any suitable combination of temporal selectivity or ionic selectivity can be implemented to increase or heighten scanning sensitivity with respect to target chemical compounds in the inconclusive running list 606.

In any case, the chromatograph-equipped mass spectrometer 302 can, during the j-th iteration of the iterative injection protocol 406, perform a scanning protocol on the injected portion of the sample 304, which can result in or otherwise yield measured mass spectrometry data 702. As shown, the measured mass spectrometry data 702 can, in some instances, comprise a chromatogram 704, a plurality of measured retention indices 708, or a plurality of measured mass spectra 710.

In various instances, the chromatograph of the chromatograph-equipped mass spectrometer 302 can electronically generate or output the chromatogram 704. In various cases, the chromatogram 704 can be a plot of abundance or intensity versus retention time. In various aspects, the chromatogram 704 can comprise a plurality of peaks 706. In various instances, the plurality of peaks 706 can comprise m peaks, for any suitable positive integer m > 1: a peak 706(1) to a peak 706(m). In various cases, each of the plurality of peaks 706 can be considered as a distinct abundance or intensity spike that can represent a respective unknown chemical compound that is present within the injected portion of the sample 304. In various aspects, each of the plurality of peaks 706 can be considered as occurring at (e.g., as being centered about) a respective retention time (e.g., horizontal axis location) of the chromatogram 704.

In various instances, the plurality of measured retention indices 708 can respectively correspond to the plurality of peaks 706. Since the plurality of peaks 706 can comprise m peaks, the plurality of measured retention indices 708 can likewise comprise m indices: a measured retention index 708(1) to a measured retention index 708(m). In various cases, each of the plurality of measured retention indices 708 can be derived based on the retention time of a respective one of the plurality of peaks 706. As a non-limiting example, the measured retention index 708(1) can correspond to the peak 706(1) (e.g., can correspond to a first unknown chemical compound in the injected portion of the sample 304). So, the measured retention index 708(1) can be a scalar whose magnitude or value represents or indicates how the retention time of the peak 706(1) relates to the retention time of a standard or baseline chemical compound (e.g., as mentioned above, the retention time of the standard or baseline chemical compound, like an n-alkane solution, can have been determined by the chromatograph-equipped mass spectrometer 302 prior to commencement of the iterative injection protocol 406). As another non-limiting example, the measured retention index 708(m) can correspond to the peak 706(m) (e.g., can correspond to an m-th unknown chemical compound in the injected portion of the sample 304). Thus, the measured retention index 708(m) can be a scalar whose magnitude or value represents or indicates how the retention time of the peak 706(m) relates to the retention time of the standard or baseline chemical compound.

In various aspects, the mass spectrometer of the chromatograph-equipped mass spectrometer 302 can electronically generate or output the plurality of measured mass spectra 710. In various instances, the plurality of measured mass spectra 710 can respectively correspond to the plurality of peaks 706. Thus, since the plurality of peaks 706 can include $m$ peaks, the plurality of measured mass spectra 710 can likewise comprise m spectra: a measured mass spectrum 710(1) to a measured mass spectrum 710(m). In various cases, each of the plurality of measured mass spectra 710 can be a plot of ion abundance or intensity versus mass-to-charge ratio for a respective one of the plurality of peaks 706. As a non-limiting example, the measured mass spectrum 710(1) can correspond to the peak 706(1). So, the measured mass spectrum 710(1) can be considered as showing which mass-to-charge ratios (e.g., which specific ions) were detected by the chromatograph-equipped mass spectrometer 302 with more or less prevalence or abundance when the peak 706(1) was encountered. As another non-limiting example, the measured mass spectrum 710(m) can correspond to the peak 706(m). Thus, the measured mass spectrum 710(m) can be considered as showing which mass-to-charge ratios were detected by the chromatograph-equipped mass spectrometer 302 with more or less prevalence or abundance when the peak 706(m) was encountered.

It should be understood and appreciated that the screening component 318 can have applied any suitable deconvolution techniques in conjunction with any suitable blank/matrix injections and background-subtraction techniques to raw data outputted by the chromatograph-equipped mass spectrometer 302 so as to obtain the plurality of peaks 706, the plurality of measured retention indices 708, or the plurality of measured mass spectra 710. Indeed, as mentioned above, the chromatograph-equipped mass spectrometer 302 can have performed an n-alkane injection protocol prior to commencement of the iterative injection protocol 406, so as to be able to compute retention times or retention indices during the iterative injection protocol 406. In like fashion, the chromatograph-equipped mass spectrometer 302 can have performed a blank-solution injection protocol prior to commencement of the iterative injection protocol 406, so as to facilitate background-subtraction or other preprocessing of the chromatogram 704 or of the plurality of measured mass spectrum 710 during the iterative injection protocol 406.

In some cases, chromatographic deconvolution can be performed (e.g., by the screening component 318) on the fly right after or in response to a portion of the sample 304 being injected, and such chromatographic deconvolution can be continually or continuously performed through data acquisition (possibly even while the screening component 318 is classifying compounds on the inconclusive running list 606 as present, absent, or still inconclusive).

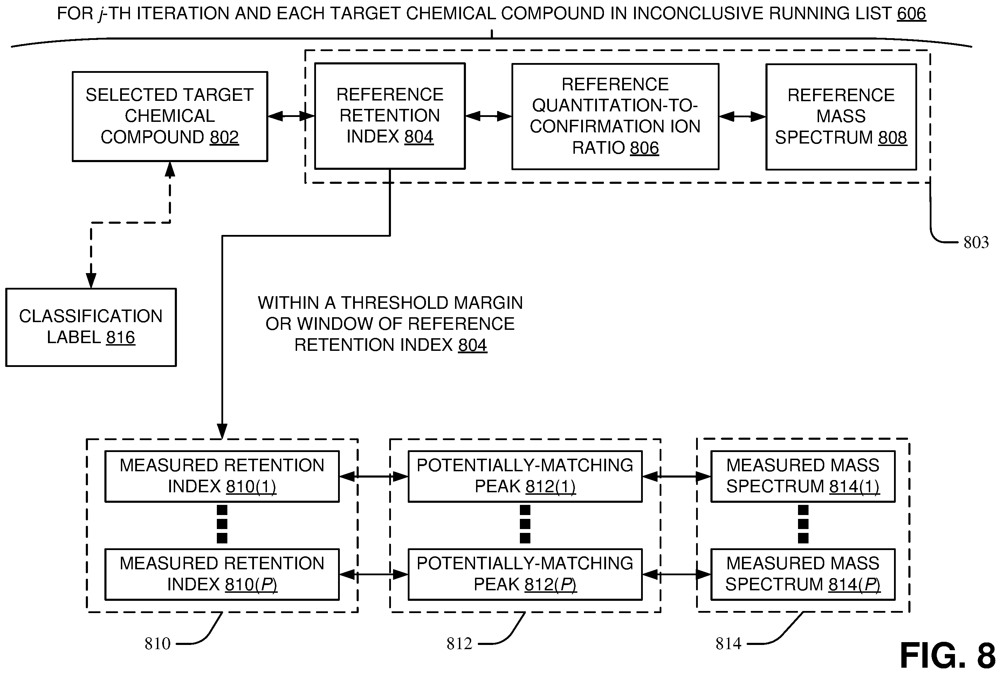

Next, consider FIG. 8. During the j-th iteration of the iterative injection protocol 406, the screening component 318 can electronically consider any of the target chemical compounds in the inconclusive running list 606. Such target chemical compound can be referred to as a selected target chemical compound 802. In various aspects, whichever of the plurality of reference retention indices 504 corresponds to the selected target chemical compound 802 can be referred to as a reference retention index 804. In various instances, whichever of the plurality of reference Q-C ion ratios 506 corresponds to the selected target chemical compound 802 can be referred to as a reference Q-C ion ratio 806. In various cases, whichever of the plurality of reference mass spectra 508 corresponds to the selected target chemical compound 802 can be referred to as a reference mass spectrum 808. In various instances, the reference retention index 804, the reference Q-C ion ratio 806, and the reference mass spectrum 808 can collectively be referred to as reference mass spectrometry data 803.

In various aspects, the screening component 318 can search through the plurality of measured retention indices 708, so as to identify a set of measured retention indices 810 that are within any suitable threshold margin or proximity of the reference retention index 804. In various instances, the set of measured retention indices 810 can comprise $p$ indices, for any suitable positive integer $p$: a measured retention index 810(1) to a measured retention index 810($p$). In various cases, the measured retention index 810(1) can be considered as a first one of the plurality of measured retention indices 708 that is within the threshold margin or proximity of the reference retention index 804. Similarly, the measured retention index 810($p$) can be considered as a p-th one of the plurality of measured retention indices 708 that is within the threshold margin or proximity of the reference retention index 804.

In various aspects, whichever of the plurality of peaks 706 that correspond to the set of measured retention indices 810 can be considered as representing unknown chemical compounds in the sample 304 that might potentially match the selected target chemical compound 802. In particular, whichever one of the plurality of peaks 706 that corresponds to the measured retention index 810(1) can be referred to as a potentially-matching peak 812(1). Likewise, whichever one of the plurality of peaks 706 that corresponds to the measured retention index 810($p$) can be referred to as a potentially-matching peak 812($p$). In various cases, the potentially-matching peak 812(1) to the potentially-matching peak 812($p$) can collectively be referred to as a set of potentially-matching peaks 812. In various instances, whichever one of the plurality of measured mass spectra 710 that corresponds to the potentially-matching peak 812(1) can be referred to as a measured mass spectrum 814(1). Likewise, whichever one of the plurality of measured mass spectra 710 that corresponds to the potentially-matching peak 812($p$) can be referred to as a measured mass spectrum 814($p$). In various cases, the measured mass spectrum 814(1) to the measured mass spectrum 814($p$) can collectively be referred to as a set of measured mass spectra 814.

In various aspects, the screening component 318 can electronically generate a classification label 816 for the selected target chemical compound 802, based on comparing: the reference Q-C ion ratio 806 or the reference mass spectrum 808; to the set of measured mass spectra 814. In various instances, the classification label 816 can be any suitable electronic data (e.g., one or more scalars, one or more vectors, one or more matrices, one or more tensors, one or more character strings, or any suitable combination thereof) that can indicate, specify, or otherwise represent how the screening component 318 classifies the presence or absence of the selected target chemical compound 802 with respect to the sample 304. As a non-limiting example, the classification label 816 can have one of three possible states, classes, or categories: a present state, class, or category; an absent state, class, or category; or an inconclusive state, class, or category. If the classification label 816 indicates the present state, class, or category, this can be interpreted as meaning that the screening component 318 has concluded that the selected target chemical compound 802 is present in the sample 304. If the classification label 816 indicates the absent state, class, or category, this can be interpreted as meaning that the screening component 318 has concluded that the selected target chemical compound 802 is absent from the sample 304. If the classification label 816 indicates the inconclusive state, class, or category, this can be interpreted as meaning that the screening component 318 has concluded neither that the selected target chemical compound 802 is present in nor absent from the sample 304.

In various aspects, in response to determining that at least one of the set of measured mass spectra 814 satisfies any suitable presence criteria with respect to the reference Q-C ion ratio 806 or with respect to the reference mass spectrum 808, the screening component 318 can cause the classification label 816 to indicate or specify the present state, class, or category. In various instances, in response to determining that all of the set of measured mass spectra 814 satisfy any suitable absence criteria with respect to the reference Q-C ion ratio 806 or with respect to the reference mass spectrum 808, the screening component 318 can cause the classification label 816 to indicate or specify the absent state, class, or category. In various cases, in response to determining both that all of the set of measured mass spectra 814 fail to satisfy the presence classification criteria and that at least one of the set of measured mass spectra 814 fails to satisfy the absence classification criteria, the screening component 318 can cause the classification label 816 to indicate or specify the inconclusive state, class, or category.

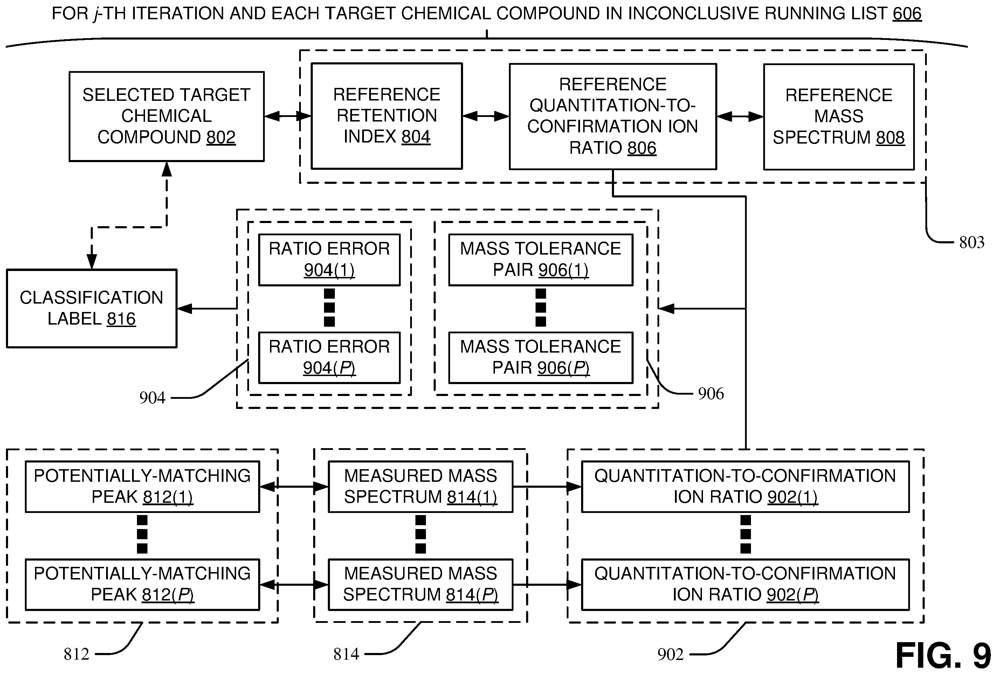

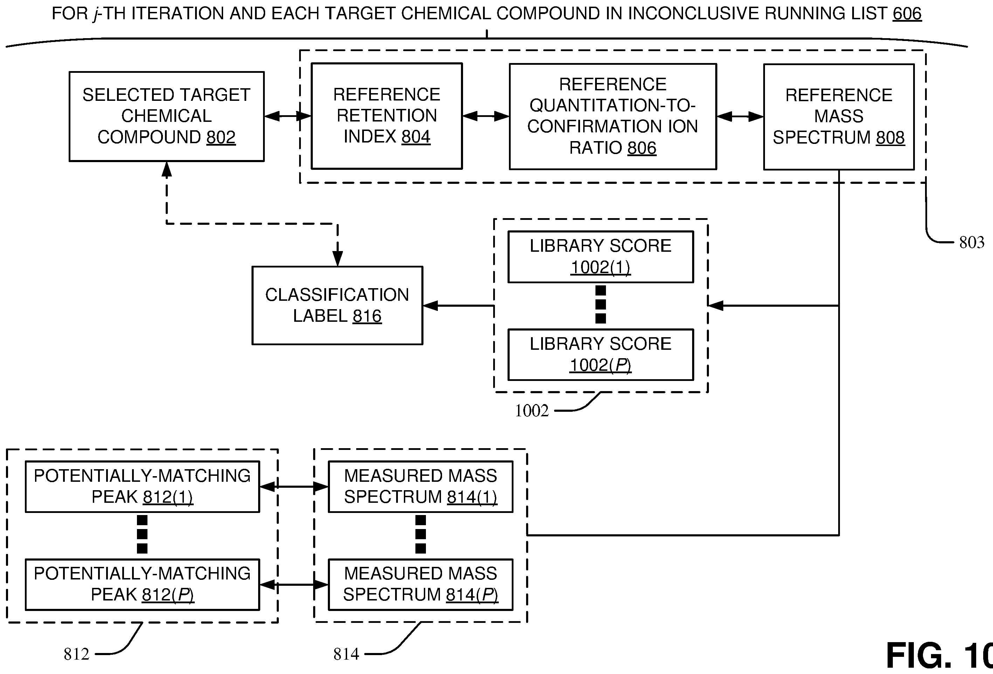

In some cases, such determinations can be based on Q-C ion ratio and mass tolerance comparisons, as described with respect to FIG. 9. In other cases, such determinations can be based on library score computations, as described with respect to FIG. 10.

Consider FIG. 9. In various embodiments, the screening component 318 can electronically identify a set of Q-C ion ratios 902 respectively corresponding to the set of measured mass spectra 814. Since the set of measured mass spectra 814 can comprise $p$ spectra, the set of Q-C ion ratios 902 can comprise $p$ ratios: a Q-C ion ratio 902(1) to a Q-C ion ratio 902($p$). In various aspects, each of the set of Q-C ion ratios 902 can be based on whatever ions are represented in the reference Q-C ion ratio 806. As a non-limiting example, suppose that the reference Q-C ion ratio 806 is the ratio of an abundance or intensity of a quantitation ion X to the abundance or intensity of a confirmation ion Y. In such case, a first abundance or intensity of the quantitation ion X can be indicated by the measured mass spectrum 814(1), a first abundance or intensity of the confirmation ion Y can be indicated by the measured mass spectrum 814(1), and the Q-C ion ratio 902(1) can be equal to or otherwise based on the ratio between that first abundance or intensity of the quantitation ion X and that first abundance or intensity of the confirmation ion Y. Also in such case, a p-th abundance or intensity of the quantitation ion X can be indicated by the measured mass spectrum 814($p$), a p-th abundance or intensity of the confirmation ion Y can be indicated by the measured mass spectrum 814($p$), and the Q-C ion ratio 902($p$) can be equal to or otherwise based on the ratio between that p-th abundance or intensity of the quantitation ion X and that p-th abundance or intensity of the confirmation ion Y.

In various aspects, the screening component 318 can electronically compute a set of ratio errors 904, by respectively comparing the reference Q-C ion ratio 806 to the set of Q-C ion ratios 902. As a non-limiting example, a ratio error 904(1) can be a scalar that is equal to or otherwise based on any suitable difference or percent-difference between the reference Q-C ion ratio 806 and the Q-C ion ratio 902(1). As another non-limiting example, a ratio error 904($p$) can be a scalar that is equal to or otherwise based on any suitable difference or percent-difference between the reference Q-C ion ratio 806 and the Q-C ion ratio 902($p$). In various instances, the ratio error 904(1) to the ratio error 904($p$) can collectively be considered as the set of ratio errors 904.

Moreover, in various cases, the screening component 318 can electronically identify a set of mass tolerance pairs 906 that respectively correspond to the set of measured mass spectra 814 and thus to the set of Q-C ion ratios 902.

As a non-limiting example, a mass tolerance pair 906(1) can be a pair of scalars whose magnitudes or values respectively represent whatever measurement resolutions are indicated by the measured mass spectrum 814(1) for the quantitation ion and the confirmation ion that make up the Q-C ion ratio 902(1). To continue the above example involving the quantitation ion X and the confirmation ion Y, the mass tolerance pair 906(1) can include a first scalar indicating the mass tolerance that the measured mass spectrum 814(1) indicates for the quantitation ion X, and the mass tolerance pair 906(1) can also include a second scalar indicating the mass tolerance that the measured mass spectrum 814(1) indicates for the confirmation ion Y. As another non-limiting example, a mass tolerance pair 906($p$) can be a pair of scalars whose magnitudes or values respectively represent whatever measurement resolutions are indicated by the measured mass spectrum 814($p$) for the quantitation ion and the confirmation ion that make up the Q-C ion ratio 902($p$). To again continue the above example involving the quantitation ion X and the confirmation ion Y, the mass tolerance pair 906($p$) can include a first scalar indicating the mass tolerance that the measured mass spectrum 814($p$) indicates for the quantitation ion X, and the mass tolerance pair 906($p$) can also include a second scalar indicating the mass tolerance that the measured mass spectrum 814($p$) indicates for the confirmation ion Y. In various cases, the mass tolerance pair 906(1) to the mass tolerance pair 906($p$) can collectively be considered as the set of mass tolerance pairs 906. It should be appreciated that lower mass tolerance values or magnitudes can signify better resolution.

Note that the set of potentially-matching peaks 812 can be considered as respectively corresponding to both the set of ratio errors 904 and the set of mass tolerance pairs 906 (e.g., the potentially-matching peak 812(1) can correspond to the ratio error 904(1) and the mass tolerance pair 906(1); the potentially-matching peak 812($p$) can correspond to the ratio error 904($p$) and the mass tolerance pair 906($p$)).

In various aspects, the presence criteria for the selected target chemical compound 802 can be that there is at least one of the set of potentially-matching peaks 812 having: a ratio error that is below any suitable threshold ratio error value (e.g., below a 15% ratio error threshold); and a mass tolerance pair both of whose scalars are below any suitable mass tolerance threshold value (e.g., below 5 parts per million). Accordingly, if there is such a potentially-matching peak, the screening component 318 can cause the classification label 816 to indicate the present state, class, or category. On the other hand, if there is no such potentially-matching peak, the screening component 318 can refrain from causing the classification label 816 to indicate the present state, class, or category.

In various instances, the absence criteria for the selected target chemical compound 802 can be that each of the set of potentially-matching peaks 812 has: a ratio error that is above the threshold ratio error value; and a mass tolerance pair both of whose scalars are below the mass tolerance threshold value. Accordingly, if this is satisfied by all the potentially-matching peaks, the screening component 318 can cause the classification label 816 to indicate the absent state, class, or category. On the other hand, if this is not satisfied by all the potentially-matching peaks, the screening component 318 can refrain from causing the classification label 816 to indicate the absent state, class, or category.

In various cases, the inconclusive criteria for the selected target chemical compound 802 can be the collective complement of the presence and absence criteria. Accordingly, if the screening component 318 determines that neither the presence criteria nor the absence criteria have been satisfied, the screening component 318 can cause the classification label 816 to indicate the inconclusive state, class, or category.

It should be appreciated and understood that the ratio error relationships and mass tolerance relationships mentioned in the above several paragraphs are mere non-limiting examples of the presence criteria and absence criteria. In various other embodiments, the presence criteria and absence criteria can be defined by or otherwise based on any other suitable ratio error relationships or mass tolerance relationships.

Now, consider FIG. 10. In various embodiments, rather than generating the set of ratio errors 904 and the set of mass tolerance pairs 906, the screening component 318 can electronically calculate a set of library scores 1002. In various aspects, the set of library scores 1002 can respectively correspond to the set of measured mass spectra 814. Thus, since the set of measured mass spectra 814 can comprise $p$ spectra, the set of library scores 1002 can comprise $p$ scores: a library score 1002(1) to a library score 1002($p$). In various instances, each of the set of library scores 1002 can be a positive, real-valued scalar whose magnitude indicates how much geometric or shape-based similarity there is between the reference mass spectrum 808 and a respective one of the set of measured mass spectra 814. For instance, the library score 1002(1) can indicate how much similarity there is between the measured mass spectrum 814(1) and the reference mass spectrum 808. As another instance, the library score 1002($p$) can indicate how much similarity there is between the measured mass spectrum 814($p$) and the reference mass spectrum 808. In various aspects, the screening component 318 can compute the set of library scores 1002 by implementing or otherwise utilizing any suitable library score computation techniques from the field of mass spectrometry. As a non-limiting example, the screening component 318 can compute library scores by leveraging spectrum-vectorization and dot product, Euclidean distance, or cosine similarity computations (e.g., the library score 1002(1) can be equal to or otherwise based on the dot product, Euclidean distance, or cosine similarity between a vectorization of the measured mass spectrum 814(1) and a vectorization of the reference mass spectrum 808). As another non-limiting example, the screening component 318 can compute library scores by leveraging Pearson correlation coefficient computations (e.g., the library score 1002(1) can be equal to or otherwise based on the Pearson correlation coefficient between the measured mass spectrum 814(1) and the reference mass spectrum 808). As yet another non-limiting example, the screening component 318 can compute library scores by leveraging peak count and intensity matching techniques (e.g., the library score 1002(1) can be based how closely the number and heights of peaks in the measured mass spectrum 814(1) match those in the reference mass spectrum 808).

Note that the set of potentially-matching peaks 812 can be considered as respectively corresponding to the set of library scores 1002 (e.g., the potentially-matching peak 812(1) can correspond to the library score 1002(1); the potentially-matching peak 812(p) can correspond to the library score 1002(p)).

In various aspects, the presence criteria for the selected target chemical compound 802 can be that there is at least one of the set of potentially-matching peaks 812 having a library score that is above any suitable upper library score threshold value (e.g., above an 850 or 85% threshold value). Accordingly, if there is such a potentially-matching peak, the screening component 318 can cause the classification label 816 to indicate the present state, class, or category. On the other hand, if there is no such potentially-matching peak, the screening component 318 can refrain from causing the classification label 816 to indicate the present state, class, or category.

In various instances, the absence criteria for the selected target chemical compound 802 can be that each of the set of potentially-matching peaks 812 has a library score that is below any suitable lower library score threshold value (e.g., below a 600 or 60% threshold value). Accordingly, if this is satisfied by all the potentially-matching peaks, the screening component 318 can cause the classification label 816 to indicate the absent state, class, or category. On the other hand, if this is not satisfied by all the potentially-matching peaks, the screening component 318 can refrain from causing the classification label 816 to indicate the absent state, class, or category.

In various cases, as above, the inconclusive criteria for the selected target chemical compound 802 can be the collective complement of the presence and absence criteria. Accordingly, if the screening component 318 determines that neither the presence criteria nor the absence criteria have been satisfied by the set of measured mass spectra 814, the screening component 318 can cause the classification label 816 to indicate the inconclusive state, class, or category.

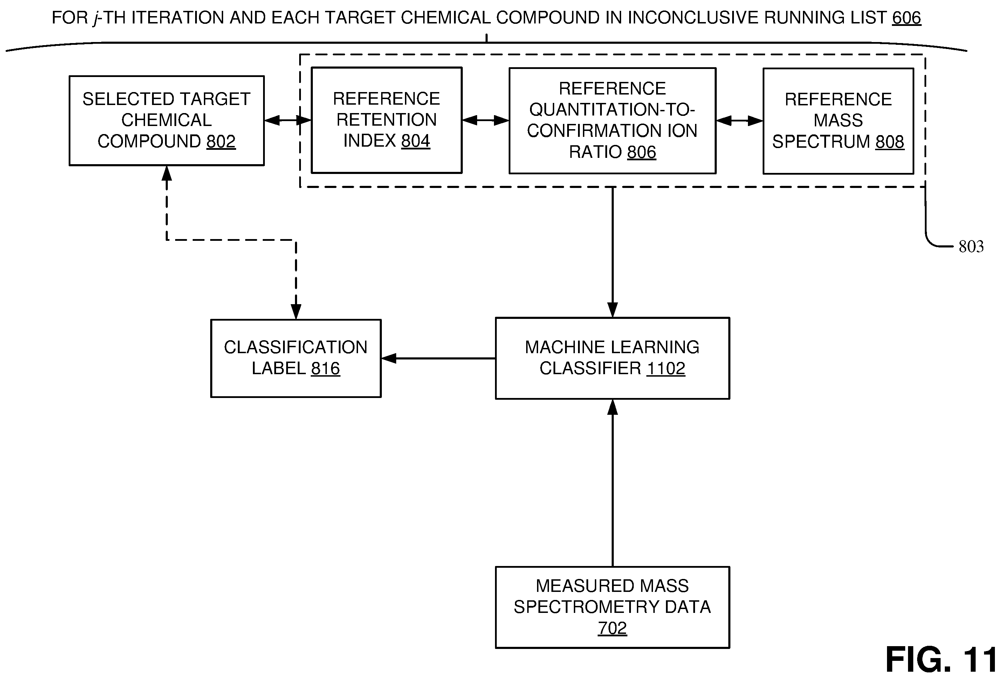

Now, consider FIG. 11. In various embodiments, rather than relying upon Q-C ion ratio comparisons or library score computations, the screening component 318 can generate the classification label 816 via artificial intelligence. Indeed, the screening component 318 can, in various aspects, electronically store, electronically maintain, electronically control, or otherwise electronically access a machine learning classifier 1102. In various instances, the machine learning classifier 1102 can exhibit any suitable internal architecture.

In some cases, the machine learning classifier 1102 can exhibit any suitable deep learning neural network internal architecture. Indeed, in various cases, the machine learning classifier 1102 can have an input layer, one or more hidden layers, and an output layer. In various instances, any of such layers can be coupled together by any suitable interneuron connections or interlayer connections, such as forward connections, skip connections, or recurrent connections. Furthermore, in various cases, any of such layers can be any suitable types of neural network layers having any suitable learnable or trainable internal parameters. For example, any of such input layer, one or more hidden layers, or output layer can be convolutional layers, whose learnable or trainable parameters can be convolutional kernels. As another example, any of such input layer, one or more hidden layers, or output layer can be dense layers, whose learnable or trainable parameters can be weight matrices or bias values. As still another example, any of such input layer, one or more hidden layers, or output layer can be batch normalization layers, whose learnable or trainable parameters can be shift factors or scale factors. As even another example, any of such input layer, one or more hidden layers, or output layer can be long short-term memory (LSTM) layers, whose learnable or trainable parameters can be input-state weight matrices or hidden-state weight matrices. As yet another example, any of such input layer, one or more hidden layers, or output layer can be transformer layers, whose learnable or trainable parameters can be single-head or multi-head attention blocks or other weight matrices. Further still, in various cases, any of such layers can be any suitable types of neural network layers having any suitable fixed or non-trainable internal parameters. For example, any of such input layer, one or more hidden layers, or output layer can be non-linearity layers, padding layers, pooling layers, or concatenation layers.

In other cases, the machine learning classifier 1102 can exhibit any other suitable internal architecture. As a non-limiting example, the machine learning classifier 1102 can, in some aspects, exhibit a support vector machine internal architecture. As another non-limiting example, the machine learning classifier 1102 can, in some aspects, exhibit a naive Bayes internal architecture. As even another non-limiting example, the machine learning classifier 1102 can, in some aspects, exhibit a decision tree or random forest internal architecture.

In some cases, the internal architecture of the machine learning classifier 1102 can be any suitable combination of any of the aforementioned.

Regardless of its specific internal architecture (e.g., of its specific numbers, types, or organizations of layers), the machine learning classifier 1102 can be configured or trained to classify a given chemical compound as either present, absent, or neither with respect to a given sample, based on inputted measured mass spectrometry data associated with that given sample and based on inputted referential mass spectrometry data associated with that given chemical compound. Accordingly, in various aspects, the screening component 318 can electronically leverage the machine learning classifier 1102, so as to generate the classification label 816.

In particular, in various embodiments, the screening component 318 can electronically execute the machine learning classifier 1102 on the reference mass spectrometry data 803 and on the measured mass spectrometry data 702. In various aspects, such execution can cause the machine learning classifier 1102 to produce the classification label 816. As a non-limiting example, the screening component 318 can concatenate the reference mass spectrometry data 803 and the measured mass spectrometry data 702 together and can feed that concatenation to an input layer of the machine learning classifier 1102. In various instances, that concatenation can complete a forward pass through one or more hidden layers of the machine learning classifier 1102, and an output layer of the machine learning classifier 1102 can compute or calculate the classification label 816 based on activation maps or feature maps produced by the one or more hidden layers of machine learning classifier 1102. In other words, the machine learning classifier 1102 can be considered as determining, inferring, or predicting whether the selected target chemical compound 802 is present in the sample 304, is absent from the sample 304, or cannot yet conclusively be determined to be present in or absent from the sample 304.

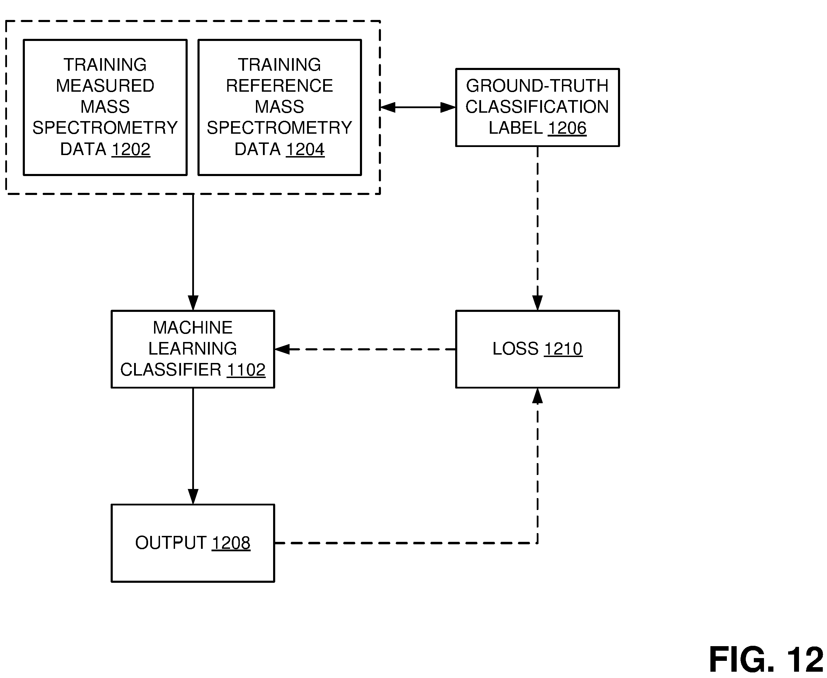

In order for the machine learning classifier 1102 to accurately, correctly, or reliably generate the classification label 816, the machine learning classifier 1102 can first undergo training. A non-limiting example of such training is described with respect to FIG. 12.

FIG. 12 illustrates an example, non-limiting block diagram showing how the machine learning classifier 1102 can be trained in accordance with one or more embodiments described herein.

In various aspects, prior to beginning training, the trainable internal parameters (e.g., convolutional kernels, weight matrices, bias values) of the machine learning classifier 1102 can be initialized in any suitable fashion (e.g., via random initialization).

In various embodiments, there can be training measured mass spectrometry data 1202, training reference mass spectrometry data 1204, or a ground-truth classification label 1206. In various aspects, the training measured mass spectrometry data 1202 can be any suitable mass spectrometry data (e.g., having the same format, size, or dimensionality as the measured mass spectrometry data 702) that is generated by any suitable chromatograph-equipped mass spectrometer for any suitable sample. In various instances, the training reference mass spectrometry data 1204 can be any suitable mass spectrometry data (e.g., having the same format, size, or dimensionality as the reference mass spectrometry data 803) that is known or deemed to be exhibited by a given chemical compound for which the training measured mass spectrometry data 1202 is to be screened. In various cases, the ground-truth classification label 1206 can be the correct or accurate presence classification, absence classification, or inconclusive classification that is known or deemed to correspond to the training measured mass spectrometry data 1202 and to the training reference mass spectrometry data 1204.

In any case, the machine learning classifier 1102 can be executed on the training measured mass spectrometry data 1202 and the training reference mass spectrometry data 803, and such execution can cause the machine learning classifier 1102 to produce an output 1208. For example, in some cases, the training measured mass spectrometry data 1202 and the training reference mass spectrometry data 1204 can be concatenated together; that concatenation can be fed or routed to an input layer of the machine learning classifier 1102; that concatenation can complete a forward pass through one or more hidden layers of the machine learning classifier 1102; and an output layer of the machine learning classifier 1102 can compute the output 1208 based on activation maps or feature maps provided by the one or more hidden layers of the machine learning classifier 1102.

Note that the format, size, or dimensionality of the output 1208 can be dictated by the number, arrangement, sizes, or other characteristics of the neurons, convolutional kernels, LSTM layers, or other internal parameters of the output layer (or of any other layers) of the machine learning classifier 1102. Accordingly, the output 1208 can be forced to have any desired format, size, or dimensionality, by adding, removing, or otherwise adjusting characteristics of the output layer (or of any other layers) of the machine learning classifier 1102. In particular, the output 1208 can be forced to have the same format, size, or dimensionality as the classification label 816. Accordingly, the output 1208 can be considered as the predicted or inferred presence, absence, or inconclusive classification label that the machine learning classifier 1102 believes should correspond to the training measured mass spectrometry data 1202 and the training reference mass spectrometry data 1204. In contrast, the ground-truth classification label 1210 can be the correct or accurate presence, absence, or inconclusive classification label that is known or deemed to correspond to the training measured mass spectrometry data 1202 and the training reference mass spectrometry data 1204. Note that, if the machine learning classifier 1102 has so far undergone no or little training, then the output 1208 can be highly inaccurate. In other words, the output 1208 can be very different from the ground-truth classification label 1206.

In various aspects, a loss 1210 (e.g., mean absolute error, mean squared error, cross-entropy error) between the output 1208 and the ground-truth classification label 1206 can be computed. In various instances, the trainable internal parameters of the machine learning classifier 1102 can be incrementally updated via backpropagation (e.g., stochastic gradient descent) based on the loss 1210.

In various cases, such execution-and-update procedure can be repeated for any suitable number of training iterations or epochs. This can ultimately cause the trainable internal parameters of the machine learning classifier 1102 to become iteratively optimized for accurately classifying presence, absence, or inconclusiveness based on inputted measured and referential mass spectrometry data. In various aspects, any suitable training batch sizes, any suitable error/loss functions, or any suitable training termination criteria can be utilized during such training.

Although the herein disclosure mainly describes the machine learning classifier 1102 as being trained in supervised fashion, this is a mere non-limiting example for ease of explanation and illustration. In various embodiments, any other suitable training paradigms can be used to train the machine learning classifier 1102, such as unsupervised training or reinforcement learning, any of which may be federated or non-federated.

It should be appreciated that the screening component 318 can generate the classification label 816 via any suitable combination of the above-described Q-C ion ratio comparisons, library score computations, or machine learning classifier implementation.

Note that it might be possible for there to be no potentially-matching peaks at all (e.g., it might be the case that none of the plurality of measured retention indices 708 is within a threshold margin or proximity of the reference retention index 804). In such situation, the screening component 318 can cause the classification label 816 to indicate the absent state, class, or category.

In any case, the screening component 318 can electronically generate the classification label 816, which can indicate that: the selected target chemical compound 802 is present in the sample 304; the selected target chemical compound 802 is absent from the sample 304; or the selected target chemical compound 802 cannot yet be conclusively determined to be present in or absent from the sample 304.

In response to the classification label 816 indicating the present state, class, or category, the screening component 318 can move the selected target chemical compound 802 from the inconclusive running list 606 to the present running list 602 (e.g., such that the selected target chemical compound 802 is no longer in the inconclusive running list 606).

In response to the classification label 816 indicating the absent state, class, or category, the screening component 318 can move the selected target chemical compound 802 from the inconclusive running list 606 to the absent running list 604 (e.g., such that the selected target chemical compound 802 is no longer in the inconclusive running list 606).

In response to the classification label 816 indicating the inconclusive state, class, or category, the screening component 318 can retain or keep the selected target chemical compound 802 on the inconclusive running list 606.

In various aspects, the screening component 318 can, during the j-th iteration of the iterative injection protocol 406, move or retain each target chemical compound in the inconclusive running list 606 in this fashion. Once all target chemical compounds that were in the inconclusive running list 606 at the start of the j-iteration are moved or retained, the screening component 318 can check whether the inconclusive running list 606 is now empty. If it is not yet empty, the screening component 318 can proceed to the (j + 1)-th iteration of the iterative injection protocol 406. On the other hand, if it is empty, the iterative injection protocol 406 can be considered as now being complete. In such case, the present running list 602 can now be considered as the set of present classifications 402 (e.g., as indicating which of the plurality of target chemical compounds 308 have been conclusively determined to be present in the sample 304), and the absent running list 604 can now be considered as the set of absent classifications 404 (e.g., as indicating which of the plurality of target chemical compounds 308 have been conclusively determined to be absent from the sample 304).

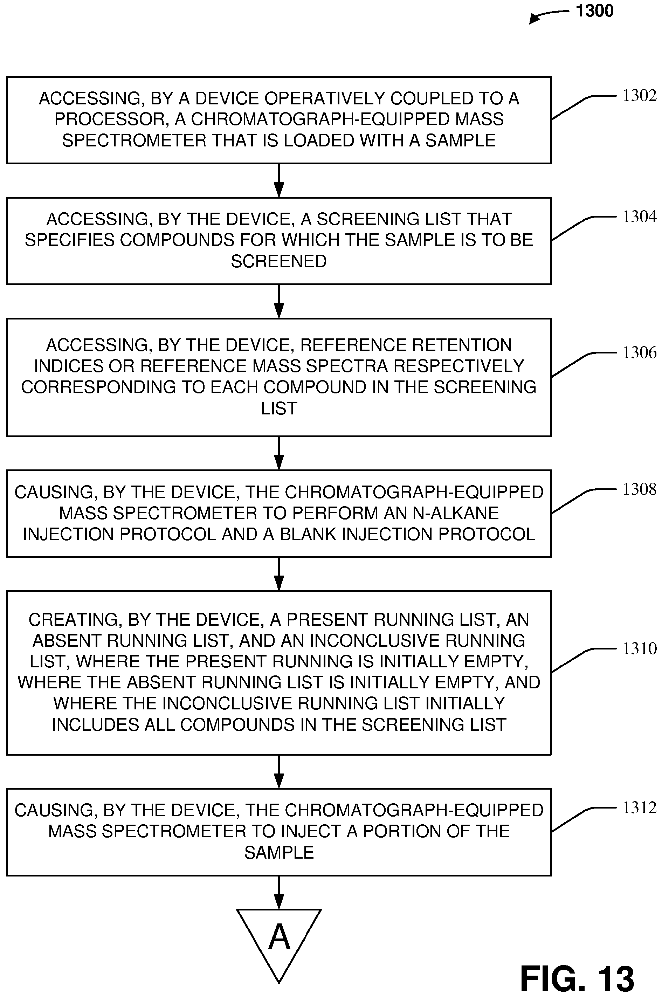

FIGs. 13-17 illustrate flow diagrams of example, non-limiting computer-implemented methods 1300, 1400, 1500, 1600, and 1700 that can facilitate inconclusive-triggered reinjection for mass spectrometry screening in accordance with one or more embodiments described herein. In various cases, the system 310 can facilitate or perform the computer-implemented methods 1300, 1400, 1500, 1600, and 1700.

First, consider FIG. 13. In various embodiments, act 1302 can include accessing, by a device (e.g., via 316) operatively coupled to a processor (e.g., 312), a chromatograph-equipped mass spectrometer (e.g., 302) that is loaded with a sample (e.g., 304).

In various aspects, act 1304 can include accessing, by the device (e.g., via 316), a screening list (e.g., 306) that specifies compounds (e.g., 308) for which the sample is to be screened.

In various instances, act 1306 can include accessing, by the device (e.g., via 316), reference retention indices (e.g., 504) or reference mass spectra (e.g., 508, from which 506 can be derived) respectively corresponding to each compound in the screening list.

In various cases, act 1308 can include causing, by the device (e.g., via 318), the chromatograph-equipped mass spectrometer to perform an n-alkane injection protocol and a blank injection protocol.

In various aspects, act 1310 can include creating, by the device (e.g., via 318), a present running list (e.g., 602), an absent running list (e.g., 604), and an inconclusive running list (e.g., 606), where the present running list can be initially empty, where the absent running list can be initially empty, and where the inconclusive running list can initially include all compounds in the screening list.

In various instances, act 1312 can include causing, by the device (e.g., via 318), the chromatograph-equipped mass spectrometer to inject a portion of the sample. In various cases, the computer-implemented method 1300 can proceed to act 1402 of the computer-implemented method 1400.

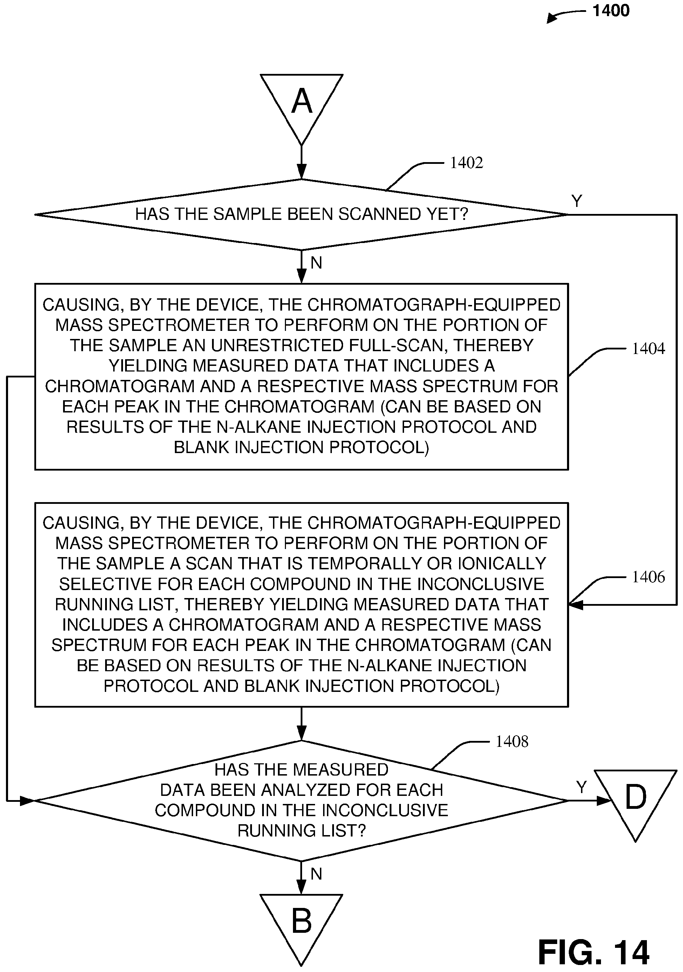

Now, consider FIG. 14. In various embodiments, act 1402 can include determining, by the device (e.g., via 318), whether the sample has been scanned yet (e.g., equivalent to determining whether this is the initial or beginning iteration of the iterative injection protocol 406). If the sample has not yet been scanned (e.g., if this is the initial or beginning iteration), the computer-implemented method 1400 can proceed to act 1404. If the sample has already been scanned (e.g., if this is a non-initial or subsequent iteration), the computer-implemented method 1400 can instead proceed to act 1406.

In various aspects, act 1404 can include causing, by the device (e.g., via 318), the chromatograph-equipped mass spectrometer to perform on the portion of the sample an unrestricted full-scan, thereby yielding measured data (e.g., 702) that includes a chromatogram (e.g., 704) and a respective mass spectrum (e.g., one of 710) for each peak (e.g., one of 706) in the chromatogram. In various cases, such measured data can be obtained via applying any suitable deconvolution or background-subtraction techniques to raw data outputted by the chromatograph-equipped mass spectrometer, which deconvolution or background-subtraction techniques can be based on the above-mentioned n-alkane injection or blank-injection protocols. In various cases, the computer-implemented method 1400 can proceed to act 1408.

In various instances, act 1406 can include causing, by the device (e.g., via 318), the chromatograph-equipped mass spectrometer to perform on the portion of the sample a scan that is temporally or ionically selective for each compound in the inconclusive running list, thereby yielding measured data (e.g., 702) that includes a chromatogram (e.g., 704) and a respective mass spectrum (e.g., one of 710) for each peak (e.g., one of 706) in the chromatogram. As above, such measured data can be obtained via applying any suitable deconvolution or background-subtraction techniques to raw data outputted by the chromatograph-equipped mass spectrometer, which deconvolution or background-subtraction techniques can be based on the above-mentioned n-alkane injection or blank-injection protocols. In various cases, the computer-implemented method 1400 can proceed to act 1408.

In various aspects, act 1408 can include determining, by the device (e.g., via 318), whether the measured data has been analyzed yet for each compound in the inconclusive running list. If not (e.g., if there is at least one compound in the inconclusive running list for which the measured data has not yet been analyzed), the computer-implemented method 1400 can proceed to act 1502 of the computer-implemented method 1500. If so (e.g., if there is no compound in the inconclusive running list for which the measured data has not yet been analyzed), the computer-implemented method 1400 can proceed to act 1702 of the computer-implemented method 1700.

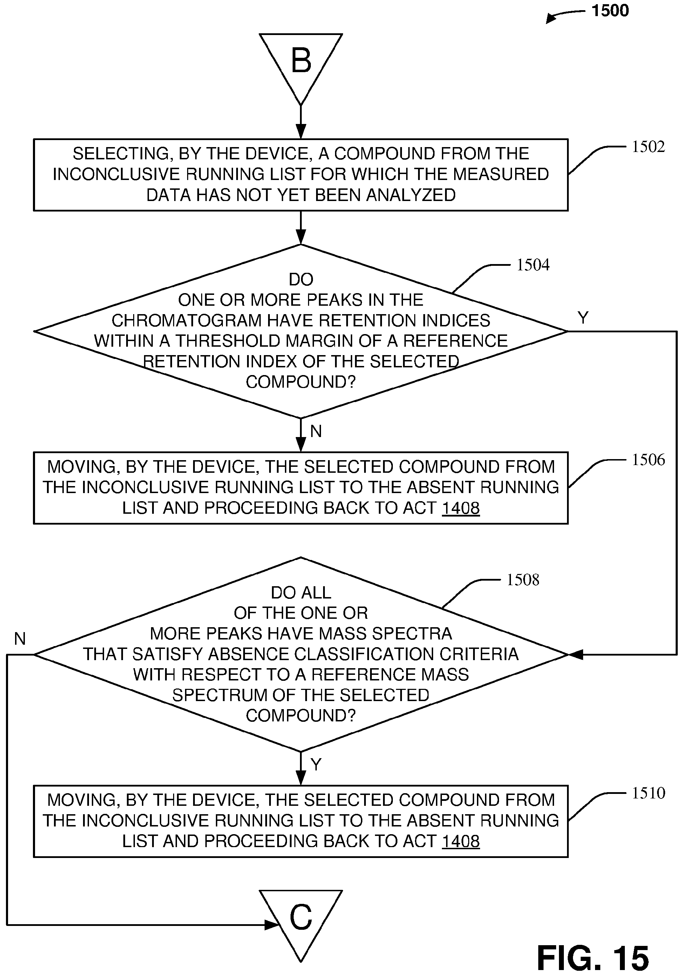

Next, consider FIG. 15. In various embodiments, act 1502 can include selecting, by the device (e.g., via 318), a compound (e.g., 802) from the inconclusive running list for which the measured data has not yet been analyzed.

In various aspects, act 1504 can include determining, by the device (e.g., via 318), whether one or more peaks (e.g., 812) in the chromatogram have retention indices (e.g., 810) that are within a threshold margin of a reference retention index (e.g., 804) of the selected compound. If not, the computer-implemented method 1500 can proceed to act 1506. If so, the computer-implemented method 1500 can instead proceed to act 1508.

In various instances, act 1506 can include moving, by the device, the selected compound from the inconclusive running list to the absent running list. In various cases, the computer-implemented method 1500 can proceed back to act 1408 of the computer-implemented method 1400.

In various aspects, act 1508 can include determining, by the device (e.g., via 318), whether all of the one or more peaks have mass spectra (e.g., 814) that satisfy absence classification criteria with respect to a reference mass spectrum (e.g., 808 or 806) of the selected compound. In various instances, such determination can be based on quantitation-to-confirmation ion ratio comparisons (e.g., as described with respect to FIG. 9) or library score computations (e.g., as described with respect to FIG. 10). If not (e.g., if at least one peak has a mass spectrum that does not satisfy the absence classification criteria), the computer-implemented method 1500 can proceed to act 1602 of the computer-implemented method 1600. If so (e.g., if all peaks have mass spectra satisfying the absence classification criteria), the computer-implemented method 1500 can proceed to act 1510.

In various instances, act 1510 can include moving, by the device (e.g., via 318), the selected compound from the inconclusive running list to the absent running list. In various cases, the computer-implemented method 1500 can proceed back to act 1408 of the computer-implemented method 1400.

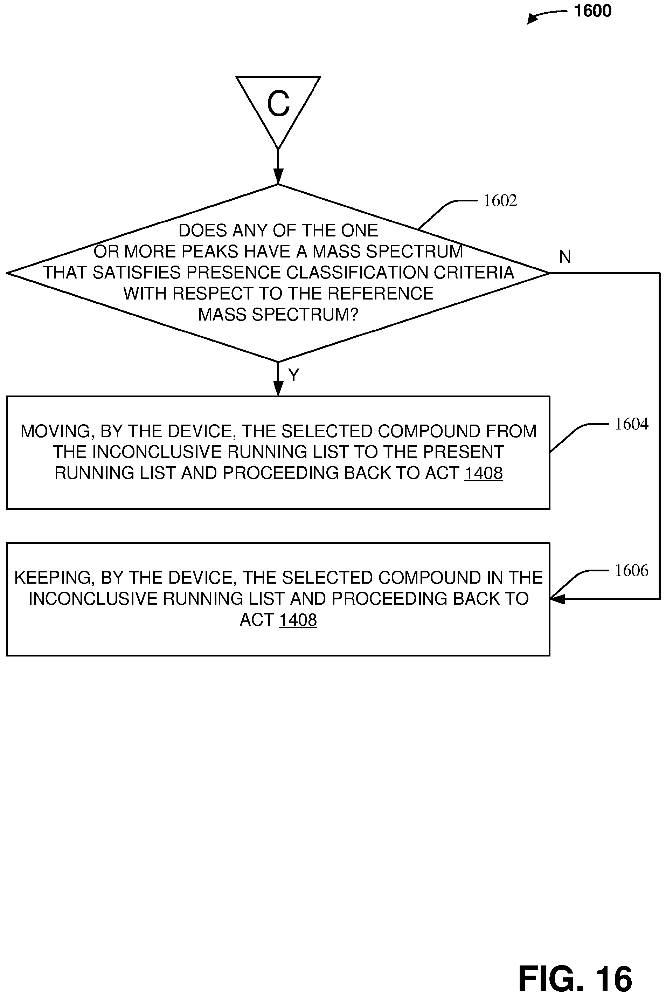

Now, consider FIG. 16. In various embodiments, act 1602 can include determining, by the device (e.g., via 318), whether any of the one or more peaks have a mass spectrum that satisfies presence classification criteria with respect to the reference mass spectrum. If so, the computer-implemented method 1600 can proceed to act 1604. If not, the computer-implemented method 1600 can instead proceed to act 1606.

In various aspects, act 1604 can include moving, by the device (e.g., via 318), the selected compound from the inconclusive running list to the present running list. In various cases, the computer-implemented method 1600 can proceed to act 1408 of the computer-implemented method 1400.

In various instances, act 1606 can include keeping, by the device (e.g., via 318), the selected compound in the inconclusive running list. In various cases, the computer-implemented method 1600 can proceed to act 1408 of the computer-implemented method 1400.

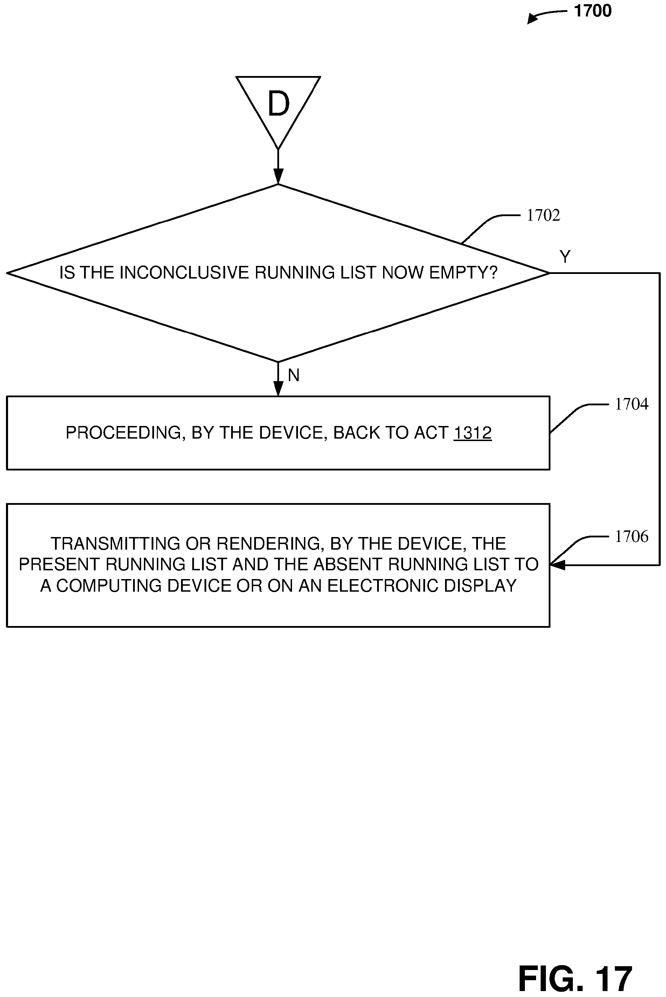

Lastly, consider FIG. 17. In various embodiments, act 1702 can include determining, by the device (e.g., via 318), whether the inconclusive running list is now empty. If not, the computer-implemented method 1700 can proceed to act 1704. If so, the computer-implemented method 1700 can instead proceed to act 1706.

In various aspects, act 1704 can include proceeding, by the device (e.g., via 318), back to act 1312 of the computer-implemented method 1300.

In various instances, act 1706 can include transmitting or rendering, by the device (e.g., via 318), the present running list and the absent running list to a computing device or an electronic display.

In various instances, machine learning algorithms or models can be implemented in any suitable way to facilitate any suitable aspects described herein. To facilitate some of the above-described machine learning aspects of various embodiments, consider the following discussion of artificial intelligence (AI). Various embodiments described herein can employ artificial intelligence to facilitate automating one or more features or functionalities. The components can employ various AI-based schemes for carrying out various embodiments/examples disclosed herein. In order to provide for or aid in the numerous determinations (e.g., determine, ascertain, infer, calculate, predict, prognose, estimate, derive, forecast, detect, compute) described herein, components described herein can examine the entirety or a subset of the data to which it is granted access and can provide for reasoning about or determine states of the system or environment from a set of observations as captured via events or data. Determinations can be employed to identify a specific context or action, or can generate a probability distribution over states, for example. The determinations can be probabilistic; that is, the computation of a probability distribution over states of interest based on a consideration of data and events. Determinations can also refer to techniques employed for composing higher-level events from a set of events or data.

Such determinations can result in the construction of new events or actions from a set of observed events or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, and so on)) schemes or systems (e.g., support vector machines, neural networks, expert systems, Bayesian belief networks, fuzzy logic, data fusion engines, and so on) in connection with performing automatic or determined action in connection with the claimed subject matter. Thus, classification schemes or systems can be used to automatically learn and perform a number of functions, actions, or determinations.

A classifier can map an input attribute vector, $z = (z_1, z_2, z_3, z_4, z_n)$, to a confidence that the input belongs to a class, as by $f(z) = confidence(class)$. Such classification can employ a probabilistic or statistical-based analysis (e.g., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naïve Bayes, Bayesian networks, decision trees, neural networks, fuzzy logic models, or probabilistic classification models providing different patterns of independence, any of which can be employed. Classification as used herein also is inclusive of statistical regression that is utilized to develop models of priority.

In order to provide additional context for various embodiments described herein, FIG. 18 and the following discussion are intended to provide a brief, general description of a suitable computing environment 1800 in which the various embodiments of the embodiment described herein can be implemented. While the embodiments have been described above in the general context of computer-executable instructions that can run on one or more computers, those skilled in the art will recognize that the embodiments can be also implemented in combination with other program modules or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multi-processor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 18, the example environment 1800 for implementing various embodiments of the aspects described herein includes a computer 1802, the computer 1802 including a processing unit 1804, a system memory 1806 and a system bus 1808. The system bus 1808 couples system components including, but not limited to, the system memory 1806 to the processing unit 1804. The processing unit 1804 can be any of various commercially available processors. Dual microprocessors and other multi-processor architectures can also be employed as the processing unit 1804.

The system bus 1808 can be any of several types of bus structure that can further interconnect to a memory bus (with or without a memory controller), a peripheral bus, and a local bus using any of a variety of commercially available bus architectures. The system memory 1806 includes ROM 1810 and RAM 1812. A basic input/output system (BIOS) can be stored in a nonvolatile memory such as ROM, erasable programmable read only memory (EPROM), EEPROM, which BIOS contains the basic routines that help to transfer information between elements within the computer 1802, such as during startup. The RAM 1812 can also include a high-speed RAM such as static RAM for caching data.

The computer 1802 further includes an internal hard disk drive (HDD) 1814 (e.g., EIDE, SATA), one or more external storage devices 1816 (e.g., a magnetic floppy disk drive (FDD) 1816, a memory stick or flash drive reader, a memory card reader, etc.) and a drive 1820, e.g., such as a solid state drive, an optical disk drive, which can read or write from a disk 1822, such as a CD-ROM disc, a DVD, a BD, etc. Alternatively, where a solid state drive is involved, disk 1822 would not be included, unless separate. While the internal HDD 1814 is illustrated as located within the computer 1802, the internal HDD 1814 can also be configured for external use in a suitable chassis (not shown). Additionally, while not shown in environment 1800, a solid state drive (SSD) could be used in addition to, or in place of, an HDD 1814. The HDD 1814, external storage device(s) 1816 and drive 1820 can be connected to the system bus 1808 by an HDD interface 1824, an external storage interface 1826 and a drive interface 1828, respectively. The interface 1824 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1802, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1812, including an operating system 1830, one or more application programs 1832, other program modules 1834 and program data 1836. All or portions of the operating system, applications, modules, or data can also be cached in the RAM 1812. The systems and methods described herein can be implemented utilizing various commercially available operating systems or combinations of operating systems.

Computer 1802 can optionally comprise emulation technologies. For example, a hypervisor (not shown) or other intermediary can emulate a hardware environment for operating system 1830, and the emulated hardware can optionally be different from the hardware illustrated in FIG. 18. In such an embodiment, operating system 1830 can comprise one virtual machine (VM) of multiple VMs hosted at computer 1802. Furthermore, operating system 1830 can provide runtime environments, such as the Java runtime environment or the .NET framework, for applications 1832. Runtime environments are consistent execution environments that allow applications 1832 to run on any operating system that includes the runtime environment. Similarly, operating system 1830 can support containers, and applications 1832 can be in the form of containers, which are lightweight, standalone, executable packages of software that include, e.g., code, runtime, system tools, system libraries and settings for an application.

Further, computer 1802 can be enable with a security module, such as a trusted processing module (TPM). For instance with a TPM, boot components hash next in time boot components, and wait for a match of results to secured values, before loading a next boot component. This process can take place at any layer in the code execution stack of computer 1802, e.g., applied at the application execution level or at the operating system (OS) kernel level, thereby enabling security at any level of code execution.

A user can enter commands and information into the computer 1802 through one or more wired/wireless input devices, e.g., a keyboard 1838, a touch screen 1840, and a pointing device, such as a mouse 1842. Other input devices (not shown) can include a microphone, an infrared (IR) remote control, a radio frequency (RF) remote control, or other remote control, a joystick, a virtual reality controller or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1804 through an input device interface 1844 that can be coupled to the system bus 1808, but can be connected by other interfaces, such as a parallel port, an IEEE 1394 serial port, a game port, a USB port, an IR interface, a BLUETOOTH® interface, etc.

A monitor 1846 or other type of display device can be also connected to the system bus 1808 via an interface, such as a video adapter 1848. In addition to the monitor 1846, a computer typically includes other peripheral output devices (not shown), such as speakers, printers, etc.

The computer 1802 can operate in a networked environment using logical connections via wired or wireless communications to one or more remote computers, such as a remote computer(s) 1850. The remote computer(s) 1850 can be a workstation, a server computer, a router, a personal computer, portable computer, microprocessor-based entertainment appliance, a peer device or other common network node, and typically includes many or all of the elements described relative to the computer 1802, although, for purposes of brevity, only a memory/storage device 1852 is illustrated. The logical connections depicted include wired/wireless connectivity to a local area network (LAN) 1854 or larger networks, e.g., a wide area network (WAN) 1856. Such LAN and WAN networking environments are commonplace in offices and companies, and facilitate enterprise-wide computer networks, such as intranets, all of which can connect to a global communications network, e.g., the Internet.

When used in a LAN networking environment, the computer 1802 can be connected to the local network 1854 through a wired or wireless communication network interface or adapter 1858. The adapter 1858 can facilitate wired or wireless communication to the LAN 1854, which can also include a wireless access point (AP) disposed thereon for communicating with the adapter 1858 in a wireless mode.

When used in a WAN networking environment, the computer 1802 can include a modem 1860 or can be connected to a communications server on the WAN 1856 via other means for establishing communications over the WAN 1856, such as by way of the Internet. The modem 1860, which can be internal or external and a wired or wireless device, can be connected to the system bus 1808 via the input device interface 1844. In a networked environment, program modules depicted relative to the computer 1802 or portions thereof, can be stored in the remote memory/storage device 1852. It will be appreciated that the network connections shown are example and other means of establishing a communications link between the computers can be used.

When used in either a LAN or WAN networking environment, the computer 1802 can access cloud storage systems or other network-based storage systems in addition to, or in place of, external storage devices 1816 as described above, such as but not limited to a network virtual machine providing one or more aspects of storage or processing of information. Generally, a connection between the computer 1802 and a cloud storage system can be established over a LAN 1854 or WAN 1856 e.g., by the adapter 1858 or modem 1860, respectively. Upon connecting the computer 1802 to an associated cloud storage system, the external storage interface 1826 can, with the aid of the adapter 1858 or modem 1860, manage storage provided by the cloud storage system as it would other types of external storage. For instance, the external storage interface 1826 can be configured to provide access to cloud storage sources as if those sources were physically connected to the computer 1802.

The computer 1802 can be operable to communicate with any wireless devices or entities operatively disposed in wireless communication, e.g., a printer, scanner, desktop or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH® wireless technologies. Thus, the communication can be a predefined structure as with a conventional network or simply an ad hoc communication between at least two devices.

FIG. 19 is a schematic block diagram of a sample computing environment 1900 with which the disclosed subject matter can interact. The sample computing environment 1900 includes one or more client(s) 1910. The client(s) 1910 can be hardware or software (e.g., threads, processes, computing devices). The sample computing environment 1900 also includes one or more server(s) 1930. The server(s) 1930 can also be hardware or software (e.g., threads, processes, computing devices). The servers 1930 can house threads to perform transformations by employing one or more embodiments as described herein, for example. One possible communication between a client 1910 and a server 1930 can be in the form of a data packet adapted to be transmitted between two or more computer processes. The sample computing environment 1900 includes a communication framework 1950 that can be employed to facilitate communications between the client(s) 1910 and the server(s) 1930. The client(s) 1910 are operably connected to one or more client data store(s) 1920 that can be employed to store information local to the client(s) 1910. Similarly, the server(s) 1930 are operably connected to one or more server data store(s) 1940 that can be employed to store information local to the servers 1930.

Various embodiments may be a system, a method, an apparatus or a computer program product at any possible technical detail level of integration. The computer program product can include a computer readable storage medium (or media) having computer readable program instructions thereon for causing a processor to carry out aspects of various embodiments. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network or a wireless network. The network can comprise copper transmission cables, optical transmission fibers, wireless transmission, routers, firewalls, switches, gateway computers or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of various embodiments can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform various aspects.

Various aspects are described herein with reference to flowchart illustrations or block diagrams of methods, apparatus (systems), and computer program products according to various embodiments. It will be understood that each block of the flowchart illustrations or block diagrams, and combinations of blocks in the flowchart illustrations or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart or block diagram block or blocks. These computer readable program instructions can also be stored in a computer readable storage medium that can direct a computer, a programmable data processing apparatus, or other devices to function in a particular manner, such that the computer readable storage medium having instructions stored therein comprises an article of manufacture including instructions which implement aspects of the function/act specified in the flowchart or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart or block diagram block or blocks.

The flowcharts and block diagrams in the Figures illustrate the architecture, functionality, and operation of possible implementations of systems, methods, and computer program products according to various embodiments. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer or computers, those skilled in the art will recognize that this disclosure also can or can be implemented in combination with other program modules. Generally, program modules include routines, programs, components, data structures, etc. that perform particular tasks or implement particular abstract data types. Moreover, those skilled in the art will appreciate that various aspects can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, or a computer. By way of illustration, both an application running on a server and the server can be a component. One or more components can reside within a process or thread of execution and a component can be localized on one computer or distributed between two or more computers. In another example, respective components can execute from various computer readable media having various data structures stored thereon. The components can communicate via local or remote processes such as in accordance with a signal having one or more data packets (e.g., data from one component interacting with another component in a local system, distributed system, or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. As used herein, the term "and/or" is intended to have the same meaning as "or." Moreover, articles "a" and "an" as used in the subject specification and annexed drawings should generally be construed to mean "one or more" unless specified otherwise or clear from context to be directed to a singular form. As used herein, the terms "example" or "exemplary" are utilized to mean serving as an example, instance, or illustration. For the avoidance of doubt, the subject matter disclosed herein is not limited by such examples. In addition, any aspect or design described herein as an "example" or "exemplary" is not necessarily to be construed as preferred or advantageous over other aspects or designs, nor is it meant to preclude equivalent exemplary structures and techniques known to those of ordinary skill in the art.

The herein disclosure describes non-limiting examples. For ease of description or explanation, various portions of the herein disclosure utilize the term "each," "every," or "all" when discussing various examples. Such usages of the term "each," "every," or "all" are non-limiting. In other words, when the herein disclosure provides a description that is applied to "each," "every," or "all" of some particular object or component, it should be understood that this is a non-limiting example, and it should be further understood that, in various other examples, it can be the case that such description applies to fewer than "each," "every," or "all" of that particular object or component.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Various non-limiting aspects are described in the following examples.

EXAMPLE 1: A system can comprise a chromatograph coupled to a mass spectrometer; and a processor that can execute computer-executable components stored in a non-transitory computer-readable memory, wherein the computer-executable components can comprise: an access component that can access a screening list specifying a plurality of target chemical compounds; and a screening component that can classify respective ones of the plurality of target chemical compounds as being present or absent in a sample, based on causing the chromatograph and mass spectrometer to perform on the sample an iterative injection protocol whose subsequent iterations are progressively compound-selective and triggered by inconclusive presence or absence classifications from prior iterations.

EXAMPLE 2: The system of any preceding example can be implemented, wherein, during a current iteration of the iterative injection protocol, the screening component can: access a first running list that includes only those of the plurality of target chemical compounds which have been classified as present in the sample during any previous iteration of the iterative injection protocol; access a second running list that includes only those of the plurality of target chemical compounds which have been classified as absent in the sample during any previous iteration of the iterative injection protocol; and access a third running list that includes only those of the plurality of target chemical compounds which have been neither classified as present nor classified as absent in the sample during any previous iteration of the iterative injection protocol.

EXAMPLE 3: The system of any preceding example can be implemented, wherein, during the current iteration, the screening component can: cause the chromatograph and mass spectrometer to inject a portion of the sample, to selectively scan that portion for each target chemical compound in the third running list, and to ignore each target chemical compound that is in either the first running or the second running list, thereby yielding current mass spectrometry data that exhibits heightened sensitivity with respect to the target chemical compounds in the third running list.

EXAMPLE 4: The system of any preceding example can be implemented, wherein the chromatograph and mass spectrometer can perform the selective scanning via: selected ion monitoring that is directed to quantitation ions and confirmation ions associated with any of the target chemical compounds on the third running list; or full-scanning that is temporally truncated based on retention indices associated with any of the target chemical compounds on the third running list.

EXAMPLE 5: The system of any preceding example can be implemented, wherein, during the current iteration, the screening component can: classify, based on comparing the current mass spectrometry data to reference mass spectrometry data corresponding to the screening list, each target chemical compound in the third running list as being present in the sample, as being absent in the sample, or as being neither present nor absent in the sample; move, from the third running list to the first running list, whichever target chemical compounds that are classified as being present in the sample; move, from the third running list to the second running list, whichever target chemical compounds that are classified as being absent in the sample; and maintain in the third running list whichever target chemical compounds are classified as being neither present nor absent in the sample.

EXAMPLE 6: The system of any preceding example can be implemented, wherein the current mass spectrometry data can comprise a chromatogram produced by the chromatograph and mass spectra produced by the mass spectrometer and respectively corresponding to peaks in the chromatogram, and wherein the screening component can classify the target chemical compounds in the third running list based on: computing retention indices for the peaks of the chromatogram; selecting a target chemical compound from the third running list; in response to no peak of the chromatogram having a retention index that is within a threshold margin of a reference retention index associated with the selected target chemical compound, classifying the selected target chemical compound as being absent in the sample; in response to one or more first peaks of the chromatogram having retention indices within the threshold margin of the reference retention index, accessing one or more first mass spectra respectively generated by the mass spectrometer for the one or more first peaks; in response to at least one of the one or more first mass spectra satisfying presence classification criteria with respect to a reference mass spectrum associated with the selected target chemical compound, classifying the selected target chemical compound as being present in the sample; in response to all of the one or more first mass spectra satisfying absence classification criteria with respect to the reference mass spectrum, classifying the selected target chemical compound as being absent in the sample; and in response to all of the one or more first mass spectra failing to satisfy the presence classification criteria and at least one of the one or more first mass spectra failing to satisfy the absence classification criteria, classifying the selected target chemical compound as being neither present nor absent in the sample.

EXAMPLE 7: The system of any preceding example can be implemented, wherein the presence classification criteria or absence classification criteria can be based on: comparison of quantitation-to-confirmation ion ratios; or computation of library scores.

EXAMPLE 8: The system of any preceding example can be implemented, wherein the screening component can compute the retention indices for the one or more first peaks, based on an n-alkane injection protocol performed by the chromatograph and mass spectrometer prior to the iterative injection protocol. EXAMPLE 9: The system of any preceding example can be implemented, wherein the screening component can: deconvolute the one or more first peaks prior to computing the retention indices.

In various embodiments, any combination or combinations of examples 1-9 can be implemented.

EXAMPLE 10: A computer-implemented method can comprise accessing, by a device operatively coupled to a processor, a screening list specifying a plurality of target chemical compounds; and classifying, by the device, respective ones of the plurality of target chemical compounds as being present or absent in a sample, based on causing a chromatograph and mass spectrometer to perform on the sample an iterative injection protocol whose subsequent iterations are progressively compound-selective and triggered by inconclusive presence or absence classifications from prior iterations.

EXAMPLE 11: The computer-implemented method of any preceding example can be implemented, further comprising, during a current iteration of the iterative injection protocol: accessing, by the device, a first running list that includes only those of the plurality of target chemical compounds which have been classified as present in the sample during any previous iteration of the iterative injection protocol; accessing, by the device, a second running list that includes only those of the plurality of target chemical compounds which have been classified as absent in the sample during any previous iteration of the iterative injection protocol; and accessing, by the device, a third running list that includes only those of the plurality of target chemical compounds which have been neither classified as present nor classified as absent in the sample during any previous iteration of the iterative injection protocol.

EXAMPLE 12: The computer-implemented method of any preceding example can be implemented, further comprising, during the current iteration: causing, by the device, the chromatograph and mass spectrometer to inject a portion of the sample, to selectively scan that portion for each target chemical compound in the third running list, and to ignore each target chemical compound that is in either the first running or the second running list, thereby yielding current mass spectrometry data that exhibits heightened sensitivity with respect to the target chemical compounds in the third running list.

EXAMPLE 13: The computer-implemented method of any preceding example can be implemented, wherein the chromatograph and mass spectrometer can perform the selective scanning via: selected ion monitoring that is directed to quantitation ions and confirmation ions associated with any of the target chemical compounds on the third running list; or full-scanning that is temporally truncated based on retention indices associated with any of the target chemical compounds on the third running list.

EXAMPLE 14: The computer-implemented method of any preceding example can be implemented, further comprising, during the current iteration: classifying, by the device and based on comparing the current mass spectrometry data to reference mass spectrometry data corresponding to the screening list, each target chemical compound in the third running list as being present in the sample, as being absent in the sample, or as being neither present nor absent in the sample; moving, by the device and from the third running list to the first running list, whichever target chemical compounds that are classified as being present in the sample; moving, by the device and from the third running list to the second running list, whichever target chemical compounds that are classified as being absent in the sample; and maintaining, by the device, in the third running list whichever target chemical compounds are classified as being neither present nor absent in the sample.

EXAMPLE 15: The computer-implemented method of any preceding example can be implemented, wherein the current mass spectrometry data can comprise a chromatogram produced by the chromatograph and mass spectra produced by the mass spectrometer and respectively corresponding to peaks in the chromatogram, and wherein the classifying the target chemical compounds in the third running list can comprise: computing, by the device, retention indices for the peaks of the chromatogram; selecting, by the device, a target chemical compound from the third running list; in response to no peak of the chromatogram having a retention index that is within a threshold margin of a reference retention index associated with the selected target chemical compound, classifying, by the device, the selected target chemical compound as being absent in the sample; in response to at least one of the one or more first mass spectra satisfying presence classification criteria with respect to a reference mass spectrum associated with the selected target chemical compound, classifying, by the device, the selected target chemical compound as being present in the sample; in response to all of the one or more first mass spectra satisfying absence classification criteria with respect to the reference mass spectrum, classifying, by the device, the selected target chemical compound as being absent in the sample; and in response to all of the one or more first mass spectra failing to satisfy the presence classification criteria and at least one of the one or more first mass spectra failing to satisfy the absence classification criteria, classifying, by the device, the selected target chemical compound as being neither present nor absent in the sample.

EXAMPLE 16: The computer-implemented method of any preceding example can be implemented, wherein the presence classification criteria or the absence classification criteria can be based on: comparison of quantitation-to-confirmation ion ratios; or computation of library scores.

EXAMPLE 17: The computer-implemented method of any preceding example can be implemented, wherein the device can compute the retention indices for the one or more first peaks, based on an n-alkane injection protocol performed by the chromatograph and mass spectrometer prior to the iterative injection protocol.

EXAMPLE 18: The computer-implemented method of any preceding example can be implemented, further comprising: deconvoluting the one or more first peaks prior to computing the retention indices.

In various embodiments, any combination or combinations of examples 10-18 can be implemented.

EXAMPLE 19: A computer program product for facilitating inconclusive-triggered reinjection for mass spectrometry screening can comprise a non-transitory computer-readable memory having program instructions embodied therewith. In various aspects, the program instructions can be executable by a processor to cause the processor to: establish electronic communication with a gas chromatograph and a mass spectrometer, the gas chromatograph and mass spectrometer being loaded with an analytical sample; retrieve a screening list that specifies one or more hazardous chemical compounds that are not permitted to be in the analytical sample; and respectively classify the one or more hazardous chemical compounds as being present or absent in the analytical sample, based on causing the gas chromatograph and mass spectrometer to perform on the analytical sample an iterative injection protocol whose subsequent iterations are progressively compound-selective and triggered by inconclusive presence or absence classifications from prior iterations.

EXAMPLE 20: The computer program product of any preceding example can be implemented, wherein, during a current iteration of the iterative injection protocol, the gas chromatograph and mass spectrometer can perform progressively compound-selective scanning via: selected ion monitoring that is directed to quantitation ions and confirmation ions associated with any of the one or more hazardous chemical compounds that have been classified as neither present nor absent in any previous iteration; or full-scanning that is temporally truncated based on retention indices associated with any of the one or more hazardous chemical compounds that have been classified as neither present nor absent in any previous iteration.

In various embodiments, any combination or combinations of examples 19-20 can be implemented.

In various embodiments, any combination or combinations of examples 1-20 can be implemented.

**Claims**

1. A computer-implemented method, comprising:

    accessing, by a device operatively coupled to a processor, a screening list specifying a plurality of target chemical compounds; and
    classifying, by the device, respective ones of the plurality of target chemical compounds as being present or absent in a sample, based on causing a chromatograph and mass spectrometer to perform on the sample an iterative injection protocol whose subsequent iterations are progressively compound-selective and triggered by inconclusive presence or absence classifications from prior iterations.

2. The computer-implemented method of claim 1, further comprising, during a current iteration of the iterative injection protocol:

    accessing, by the device, a first running list that includes only those of the plurality of target chemical compounds which have been classified as present in the sample during any previous iteration of the iterative injection protocol;
    accessing, by the device, a second running list that includes only those of the plurality of target chemical compounds which have been classified as absent in the sample during any previous iteration of the iterative injection protocol; and
    accessing, by the device, a third running list that includes only those of the plurality of target chemical compounds which have been neither classified as present nor classified as absent in the sample during any previous iteration of the iterative injection protocol.

3. The computer-implemented method of claim 2, further comprising, during the current iteration:

    causing, by the device, the chromatograph and mass spectrometer to inject a portion of the sample, to selectively scan that portion for each target chemical compound in the third running list, and to ignore each target chemical compound that is in either the first running or the second running list, thereby yielding current mass spectrometry data that exhibits heightened sensitivity with respect to the target chemical compounds in the third running list.

4. The computer-implemented method of claim 3, wherein the chromatograph and mass spectrometer perform the selective scanning via: selected ion monitoring that is directed to quantitation ions and confirmation ions associated with any of the target chemical compounds on the third running list; or full-scanning that is temporally truncated based on retention indices associated with any of the target chemical compounds on the third running list.

5. The computer-implemented method of claim 3, further comprising, during the current iteration:

    classifying, by the device and based on comparing the current mass spectrometry data to reference mass spectrometry data corresponding to the screening list, each target chemical compound in the third running list as being present in the sample, as being absent in the sample, or as being neither present nor absent in the sample;

    moving, by the device and from the third running list to the first running list, whichever target chemical compounds that are classified as being present in the sample;

    moving, by the device and from the third running list to the second running list, whichever target chemical compounds that are classified as being absent in the sample; and

    maintaining, by the device, in the third running list whichever target chemical compounds are classified as being neither present nor absent in the sample.

6. The computer-implemented method of claim 5, wherein the current mass spectrometry data comprises a chromatogram produced by the chromatograph and mass spectra produced by the mass spectrometer and respectively corresponding to peaks in the chromatogram, and the classifying the target chemical compounds in the third running list comprises:

    computing, by the device, retention indices for the peaks of the chromatogram;

    selecting, by the device, a target chemical compound from the third running list;

    in response to no peak of the chromatogram having a retention index that is within a threshold margin of a reference retention index associated with the selected target chemical compound, classifying, by the device, the selected target chemical compound as being absent in the sample;

    in response to one or more first peaks of the chromatogram having retention indices within the threshold margin of the reference retention index, accessing, by the device, one or more first mass spectra respectively generated by the mass spectrometer for the one or more first peaks;

    in response to at least one of the one or more first mass spectra satisfying presence classification criteria with respect to a reference mass spectrum associated with the selected target chemical compound, classifying, by the device, the selected target chemical compound as being present in the sample;

    in response to all of the one or more first mass spectra satisfying absence classification criteria with respect to the reference mass spectrum, classifying, by the device, the selected target chemical compound as being absent in the sample; and

    in response to all of the one or more first mass spectra failing to satisfy the presence classification criteria and at least one of the one or more first mass spectra failing to satisfy the absence classification criteria, classifying, by the device, the selected target chemical compound as being neither present nor absent in the sample.

7. The computer-implemented method of claim 6, wherein the presence classification criteria or the absence classification criteria are based on: comparison of quantitation-to-confirmation ion ratios; or computation of library scores.

8. The computer-implemented method of claim 6, wherein the device computes the retention indices for the one or more first peaks, based on an n-alkane injection protocol performed by the chromatograph and mass spectrometer prior to the iterative injection protocol.

9. The computer-implemented method of claim 6, further comprising:
   deconvoluting the one or more first peaks prior to computing the retention indices.

10. A system, comprising:
   a chromatograph coupled to a mass spectrometer; a processor that executes computer-executable components stored in a non-transitory computer-readable memory, wherein the computer executable components, when executed by the processor, cause the method claim of any of the preceding claims to be carried out.

11. A computer program for facilitating inconclusive-triggered reinjection for mass spectrometry screening, the computer program comprising program instructions executable by a processor to cause the processor to:

    establish electronic communication with a gas chromatograph and a mass spectrometer, the gas chromatograph and mass spectrometer being loaded with an analytical sample;

    retrieve a screening list that specifies one or more hazardous chemical compounds that are not permitted to be in the analytical sample; and

    respectively classify the one or more hazardous chemical compounds as being present or absent in the analytical sample, based on causing the gas chromatograph and mass spectrometer to perform on the analytical sample an iterative injection protocol whose subsequent iterations are progressively compound-selective and triggered by inconclusive presence or absence classifications from prior iterations.

**12.** The computer program of claim 11, wherein, during a current iteration of the iterative injection protocol, the gas chromatograph and mass spectrometer perform progressively compound-selective scanning via: selected ion monitoring that is directed to quantitation ions and confirmation ions associated with any of the one or more hazardous chemical compounds that have been classified as neither present nor absent in any previous iteration; or full-scanning that is temporally truncated based on retention indices associated with any of the one or more hazardous chemical compounds that have been classified as neither present nor absent in any previous iteration.

**13.** A computer program product comprising a non-transitory computer readable memory within which is stored the computer program of claim 11 or claim 12.

SCIENTIFIC INSTRUMENT MODULE
102

FIRST (SCREENING LIST
ACCESS) LOGIC
104

SECOND (INCONCLUSIVE-
TRIGGERED REINJECTION)
LOGIC
106

**FIG. 1**

200

PERFORM FIRST OPERATIONS ACCESSING, BY A
DEVICE OPERATIVELY COUPLED TO A
PROCESSOR, A SCREENING LIST SPECIFYING A
PLURALITY OF TARGET CHEMICAL COMPOUNDS — 202

PERFORM SECOND OPERATIONS CLASSIFYING,
BY THE DEVICE, RESPECTIVE ONES OF THE
PLURALITY OF TARGET CHEMICAL COMPOUNDS
AS BEING PRESENT OR ABSENT IN A SAMPLE,
BASED ON CAUSING A CHROMATOGRAPH AND
MASS SPECTROMETER TO PERFORM ON THE
SAMPLE AN ITERATIVE INJECTION PROTOCOL
WHOSE SUBSEQUENT ITERATIONS ARE
PROGRESSIVELY COMPOUND-SELECTIVE AND
TRIGGERED BY INCONCLUSIVE PRESENCE OR
ABSENCE CLASSIFICATIONS FROM PRIOR
ITERATIONS — 204

**FIG. 2**

FIG. 3

CHROMATOGRAPH-EQUIPPED MASS SPECTROMETER 302

SAMPLE 304

SCREENING LIST 306

TARGET CHEMICAL COMPOUND 308(1)

TARGET CHEMICAL COMPOUND 308(N)

308

SYSTEM 310

SOFTWARE COMPONENTS 315

SCREENING COMPONENT 318

PRESENT CLASSIFICATIONS 402

ABSENT CLASSIFICATIONS 404

ITERATIVE INJECTION PROTOCOL 406

ACCESS COMPONENT 316

MEMORY 314

PROCESSOR 312

FIG. 4

**REFERENCE MASS SPECTROMETRY DATA 502**

REFERENCE MASS SPECTRUM 508(1) ▪▪▪ REFERENCE MASS SPECTRUM 508(N) — 508

REFERENCE QUANTITATION-TO-CONFIRMATION ION RATIO 506(1) ▪▪▪ REFERENCE QUANTITATION-TO-CONFIRMATION ION RATIO 506(N) — 506

REFERENCE RETENTION INDEX 504(1) ▪▪▪ REFERENCE RETENTION INDEX 504(N) — 504

**SCREENING LIST 306**

TARGET CHEMICAL COMPOUND 308(1) ▪▪▪ TARGET CHEMICAL COMPOUND 308(N) — 308

**FIG. 5**

FOR $j$-TH ITERATION

IF $j = 1$, THIS IS EMPTY;

IF $j > 1$, THIS INCLUDES WHICHEVER OF PLURALITY OF TARGET CHEMICAL COMPOUNDS 308 WERE CLASSIFIED AS PRESENT IN ANY PREVIOUS ITERATION

IF $j = 1$, THIS IS EMPTY;

IF $j > 1$, THIS INCLUDES WHICHEVER OF PLURALITY OF TARGET CHEMICAL COMPOUNDS 308 WERE CLASSIFIED AS ABSENT IN ANY PREVIOUS ITERATION

IF $j = 1$, THIS CONTAINS ALL OF PLURALITY OF TARGET CHEMICAL COMPOUNDS 308;

IF $j > 1$, THIS EXCLUDES WHICHEVER TARGET CHEMICAL COMPOUNDS ARE IN PRESENT RUNNING LIST 602 OR ABSENT RUNNING LIST 604

| PRESENT RUNNING LIST 602 |

| ABSENT RUNNING LIST 604 |

| INCONCLUSIVE RUNNING LIST 606 |

FIG. 6

FOR *j*-TH ITERATION

CHROMATOGRAPH-
EQUIPPED MASS
SPECTROMETER 302

SAMPLE 304

INJECTS A PORTION OF SAMPLE 304;

IF *j* = 1, PERFORMS ON THE PORTION A FULL-SCAN
PROTOCOL;

IF *j* > 1, PERFORMS ON THE PORTION A SCAN PROTOCOL
THAT IS TEMPORALLY OR IONICALLY SELECTIVE FOR EACH
TARGET CHEMICAL COMPOUND IN THE INCONCLUSIVE
RUNNING LIST 606

MEASURED MASS SPECTROMETRY DATA 702

708

706

CHROMATOGRAM
704

| MEASURED RETENTION INDEX 708(1) | PEAK 706(1) | MEASURED MASS SPECTRUM 710(1) |
| MEASURED RETENTION INDEX 708(*M*) | PEAK 706(*M*) | MEASURED MASS SPECTRUM 710(*M*) |

710

**FIG. 7**

EP 4 704 140 A1

SELECTED TARGET CHEMICAL COMPOUND 802

REFERENCE RETENTION INDEX 804

REFERENCE QUANTITATION-TO-CONFIRMATION ION RATIO 806

REFERENCE MASS SPECTRUM 808

803

CLASSIFICATION LABEL 816

WITHIN A THRESHOLD MARGIN OR WINDOW OF REFERENCE RETENTION INDEX 804

MEASURED RETENTION INDEX 810(1)

POTENTIALLY-MATCHING PEAK 812(1)

MEASURED MASS SPECTRUM 814(1)

MEASURED RETENTION INDEX 810(*P*)

POTENTIALLY-MATCHING PEAK 812(*P*)

MEASURED MASS SPECTRUM 814(*P*)

810

812

814

**FIG. 8**

EP 4 704 140 A1

SELECTED TARGET CHEMICAL COMPOUND 802

REFERENCE RETENTION INDEX 804

REFERENCE QUANTITATION-TO-CONFIRMATION ION RATIO 806

REFERENCE MASS SPECTRUM 808

803

CLASSIFICATION LABEL 816

RATIO ERROR 904(1)

⋮

RATIO ERROR 904(*P*)

904

MASS TOLERANCE PAIR 906(1)

⋮

MASS TOLERANCE PAIR 906(*P*)

906

POTENTIALLY-MATCHING PEAK 812(1)

⋮

POTENTIALLY-MATCHING PEAK 812(*P*)

812

MEASURED MASS SPECTRUM 814(1)

⋮

MEASURED MASS SPECTRUM 814(*P*)

814

QUANTITATION-TO-CONFIRMATION ION RATIO 902(1)

⋮

QUANTITATION-TO-CONFIRMATION ION RATIO 902(*P*)

902

EP 4 704 140 A1

**FIG. 9**

SELECTED TARGET CHEMICAL COMPOUND 802 ↔ REFERENCE RETENTION INDEX 804 ↔ REFERENCE QUANTITATION-TO-CONFIRMATION ION RATIO 806 ↔ REFERENCE MASS SPECTRUM 808

803

LIBRARY SCORE 1002(1)

⋮

LIBRARY SCORE 1002(*P*)

1002

CLASSIFICATION LABEL 816

POTENTIALLY-MATCHING PEAK 812(1) ↔ MEASURED MASS SPECTRUM 814(1)

⋮

POTENTIALLY-MATCHING PEAK 812(*P*) ↔ MEASURED MASS SPECTRUM 814(*P*)

812

814

EP 4 704 140 A1

**FIG. 10**

```
┌──────────────────┐     ┌──────────────┐ ┌──────────────────┐ ┌──────────────┐
│ SELECTED TARGET  │     │  REFERENCE   │ │    REFERENCE     │ │  REFERENCE   │
│    CHEMICAL      │◄───►│  RETENTION   │◄►│ QUANTITATION-TO- │◄►│    MASS      │
│  COMPOUND 802    │     │  INDEX 804   │ │ CONFIRMATION ION │ │ SPECTRUM 808 │
│                  │     │              │ │    RATIO 806     │ │              │
└──────────────────┘     └──────────────┘ └──────────────────┘ └──────────────┘
```

803

```
┌──────────────────┐          ┌──────────────────┐
│  CLASSIFICATION  │◄─────────│ MACHINE LEARNING │
│    LABEL 816     │          │ CLASSIFIER 1102  │
└──────────────────┘          └──────────────────┘
                                      ▲
                              ┌──────────────────┐
                              │  MEASURED MASS   │
                              │ SPECTROMETRY DATA│
                              │       702        │
                              └──────────────────┘
```

**FIG. 11**

EP 4 704 140 A1

FIG. 12

1300

ACCESSING, BY A DEVICE OPERATIVELY COUPLED TO A PROCESSOR, A CHROMATOGRAPH-EQUIPPED MASS SPECTROMETER THAT IS LOADED WITH A SAMPLE — 1302

ACCESSING, BY THE DEVICE, A SCREENING LIST THAT SPECIFIES COMPOUNDS FOR WHICH THE SAMPLE IS TO BE SCREENED — 1304

ACCESSING, BY THE DEVICE, REFERENCE RETENTION INDICES OR REFERENCE MASS SPECTRA RESPECTIVELY CORRESPONDING TO EACH COMPOUND IN THE SCREENING LIST — 1306

CAUSING, BY THE DEVICE, THE CHROMATOGRAPH-EQUIPPED MASS SPECTROMETER TO PERFORM AN N-ALKANE INJECTION PROTOCOL AND A BLANK INJECTION PROTOCOL — 1308

CREATING, BY THE DEVICE, A PRESENT RUNNING LIST, AN ABSENT RUNNING LIST, AND AN INCONCLUSIVE RUNNING LIST, WHERE THE PRESENT RUNNING IS INITIALLY EMPTY, WHERE THE ABSENT RUNNING LIST IS INITIALLY EMPTY, AND WHERE THE INCONCLUSIVE RUNNING LIST INITIALLY INCLUDES ALL COMPOUNDS IN THE SCREENING LIST — 1310

CAUSING, BY THE DEVICE, THE CHROMATOGRAPH-EQUIPPED MASS SPECTROMETER TO INJECT A PORTION OF THE SAMPLE — 1312

A

**FIG. 13**

1400

A

1402

HAS THE SAMPLE BEEN SCANNED YET?

N

Y

CAUSING, BY THE DEVICE, THE CHROMATOGRAPH-EQUIPPED MASS SPECTROMETER TO PERFORM ON THE PORTION OF THE SAMPLE AN UNRESTRICTED FULL-SCAN, THEREBY YIELDING MEASURED DATA THAT INCLUDES A CHROMATOGRAM AND A RESPECTIVE MASS SPECTRUM FOR EACH PEAK IN THE CHROMATOGRAM (CAN BE BASED ON RESULTS OF THE N-ALKANE INJECTION PROTOCOL AND BLANK INJECTION PROTOCOL)

1404

CAUSING, BY THE DEVICE, THE CHROMATOGRAPH-EQUIPPED MASS SPECTROMETER TO PERFORM ON THE PORTION OF THE SAMPLE A SCAN THAT IS TEMPORALLY OR IONICALLY SELECTIVE FOR EACH COMPOUND IN THE INCONCLUSIVE RUNNING LIST, THEREBY YIELDING MEASURED DATA THAT INCLUDES A CHROMATOGRAM AND A RESPECTIVE MASS SPECTRUM FOR EACH PEAK IN THE CHROMATOGRAM (CAN BE BASED ON RESULTS OF THE N-ALKANE INJECTION PROTOCOL AND BLANK INJECTION PROTOCOL)

1406

1408

HAS THE MEASURED DATA BEEN ANALYZED FOR EACH COMPOUND IN THE INCONCLUSIVE RUNNING LIST?

Y

D

N

B

FIG. 14

1500

B

SELECTING, BY THE DEVICE, A COMPOUND FROM THE
INCONCLUSIVE RUNNING LIST FOR WHICH THE MEASURED
DATA HAS NOT YET BEEN ANALYZED — 1502

DO
ONE OR MORE PEAKS IN THE
CHROMATOGRAM HAVE RETENTION INDICES
WITHIN A THRESHOLD MARGIN OF A REFERENCE
RETENTION INDEX OF THE SELECTED
COMPOUND? — 1504

Y

N

MOVING, BY THE DEVICE, THE SELECTED COMPOUND FROM
THE INCONCLUSIVE RUNNING LIST TO THE ABSENT RUNNING
LIST AND PROCEEDING BACK TO ACT 1408 — 1506

DO ALL
OF THE ONE OR
MORE PEAKS HAVE MASS SPECTRA
THAT SATISFY ABSENCE CLASSIFICATION CRITERIA
WITH RESPECT TO A REFERENCE MASS
SPECTRUM OF THE SELECTED
COMPOUND? — 1508

N

Y

MOVING, BY THE DEVICE, THE SELECTED COMPOUND FROM
THE INCONCLUSIVE RUNNING LIST TO THE ABSENT RUNNING
LIST AND PROCEEDING BACK TO ACT 1408 — 1510

C

FIG. 15

1600

C

1602

DOES ANY OF THE ONE
OR MORE PEAKS HAVE A MASS SPECTRUM
THAT SATISFIES PRESENCE CLASSIFICATION CRITERIA
WITH RESPECT TO THE REFERENCE
MASS SPECTRUM?

N

Y

MOVING, BY THE DEVICE, THE SELECTED COMPOUND FROM
THE INCONCLUSIVE RUNNING LIST TO THE PRESENT
RUNNING LIST AND PROCEEDING BACK TO ACT 1408

1604

KEEPING, BY THE DEVICE, THE SELECTED COMPOUND IN THE
INCONCLUSIVE RUNNING LIST AND PROCEEDING BACK TO
ACT 1408

1606

FIG. 16

1700

D

IS THE INCONCLUSIVE RUNNING LIST NOW EMPTY? — 1702 Y

N

PROCEEDING, BY THE DEVICE, BACK TO ACT 1312 — 1704

TRANSMITTING OR RENDERING, BY THE DEVICE, THE PRESENT RUNNING LIST AND THE ABSENT RUNNING LIST TO A COMPUTING DEVICE OR ON AN ELECTRONIC DISPLAY — 1706

FIG. 17

1800

1802

PROCESSING
UNIT — 1804

1830
OPERATING SYSTEM

1832
APPLICATIONS

1834
MODULES

1836
DATA

1808      1806

SYSTEM
MEMORY

1812

RAM

1810
ROM

1824
INTERFACE

1814
HDD

1826
INTERFACE

1816
EXTERNAL
STORAGE

BUS

1828
INTERFACE

1820
DRIVE

1822
DISK

1846
MONITOR

1848
VIDEO
ADAPTOR

1838
KEYBOARD

1840
TOUCH
SCREEN

(WIRED/WIRELESS)

1844

INPUT
DEVICE
INTERFACE

1842
MOUSE

1860
MODEM

1856
WAN

1850
REMOTE
COMPUTER(S)

1858
NETWORK
ADAPTOR

1854
LAN

1852
MEMORY/
STORAGE

(WIRED/WIRELESS)

# FIG. 18

**FIG. 19**

Europäisches
Patentamt

European
Patent Office

Office européen
des brevets

# EUROPEAN SEARCH REPORT

**Application Number**

EP 25 19 8497

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2016 095253 A (SHIMADZU CORP) 26 May 2016 (2016-05-26) * paragraph [0001] * * paragraphs [0015] - [0018] * * paragraph [0029] * * paragraphs [0032] - [0038]; figure 1 * * paragraphs [0039] - [0049], [0056]; figure 2 * | 1-13 | INV. H01J49/00 |
| A | US 2002/120404 A1 (PARKER KENNETH C [US]) 29 August 2002 (2002-08-29) * paragraphs [0109] - [0111]; figure 7 * | 1-13 | |
| A | US 2022/208535 A1 (REMES PHILIP M [US] ET AL) 30 June 2022 (2022-06-30) * paragraphs [0091] - [0095] * | 1-13 | |
| A | US 2021/333251 A1 (GEROMANOS SCOTT J [US] ET AL) 28 October 2021 (2021-10-28) * paragraphs [0051] - [0054]; figure 1 * * paragraphs [0140] - [0155]; figure 6 * | 1-13 | |
| | | | **TECHNICAL FIELDS SEARCHED (IPC)** |
| | | | H01J |

The present search report has been drawn up for all claims

| Place of search | Date of completion of the search | Examiner |
|---|---|---|
| The Hague | 15 January 2026 | Loiseleur, Pierre |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 25 19 8497

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2026

| Patent document cited in search report | | Publication date | Patent family member(s) | | Publication date |
|---|---|---|---|---|---|
| JP 2016095253 | A | 26-05-2016 | JP | 6308107 B2 | 11-04-2018 |
| | | | JP | 2016095253 A | 26-05-2016 |
| US 2002120404 | A1 | 29-08-2002 | NONE | | |
| US 2022208535 | A1 | 30-06-2022 | CN | 114689781 A | 01-07-2022 |
| | | | EP | 4020522 A1 | 29-06-2022 |
| | | | US | 2022208535 A1 | 30-06-2022 |
| US 2021333251 | A1 | 28-10-2021 | CN | 115380212 A | 22-11-2022 |
| | | | EP | 4139673 A1 | 01-03-2023 |
| | | | US | 2021333251 A1 | 28-10-2021 |
| | | | WO | 2021214728 A1 | 28-10-2021 |

EPO FORM P0459

For more details about this annex : see Official Journal of the European Patent Office, No. 12/82